# EUROPÄISCHE PATENTSCHRIFT

(11) **EP 4 326 474 B1**
(45) Veröffentlichungstag und Bekanntmachung des Hinweises auf die Patenterteilung: **16.10.2024**
(21) Anmeldenummer: 21746020.3
(22) Anmeldetag: 16.07.2021
(51) Int. Cl.: B23K 20/10, B23K 20/00, B23K 20/26, B23K 31/12, B23K 101/38

(54) **VERFAHREN ZUM ERMITTELN EINER ZUSTANDSINFORMATION BETREFFEND EINE ULTRASCHALLSCHWEISSEINRICHTUNG**
METHOD FOR DETERMINING STATE-RELATED INFORMATION CONCERNING AN ULTRASONIC WELDING DEVICE
PROCÉDÉ DE DÉTERMINATION D'INFORMATIONS RELATIVES À L'ÉTAT CONCERNANT UN DISPOSITIF DE SOUDAGE PAR ULTRASONS

(43) Veröffentlichungstag der Anmeldung: 28.02.2024
(73) Patentinhaber: Schunk Sonosystems GmbH, 35435 Wettenberg (DE)
(72) Erfinder: KUEPER, Michael, 35398 Giessen (DE); FEY, Manuel, 35585 Wetzlar (DE)
(74) Vertreter: Qip Patentanwälte Dr. Kuehn & Partner mbB
(86) Internationale Anmeldenummer: PCT/EP2021/070017
(87) Internationale Veröffentlichungsnummer: WO 2023/284981

(56) Entgegenhaltungen:
- DE-A1- 102016 110 590
- US-A1- 2015 168 942

## Beschreibung

### GEBIET DER ERFINDUNG

Die vorliegende Erfindung betrifft ein Verfahren zum Ermitteln einer Zustandsinformation, beispielsweise einer Verschleißinformation, betreffend eine Ultraschallschweißeinrichtung. Ferner betrifft die Erfindung eine Ultraschallschweißeinrichtung, die zur Durchführung des Verfahrens konfiguriert ist, sowie ein entsprechendes Computerprogrammprodukt und ein dieses speicherndes computerlesbares Medium.

### HINTERGRUND DER ERFINDUNG

Ultraschallschweißen kann dazu eingesetzt werden, zwei Komponenten mechanisch fest und/oder elektrisch leitfähig miteinander zu verbinden. Beispielsweise kann es für verschiedene Einsatzzwecke erforderlich sein, Litzen von Kabeln mechanisch und elektrisch leitfähig miteinander zu verbinden. Dadurch können beispielsweise Kabelstränge oder Kabelbäume gefertigt werden, die dazu verwendet werden können, elektrische Verbraucher, etwa innerhalb eines Fahrzeugs, miteinander, mit einer Energiequelle und/oder mit einer Steuerung elektrisch leitfähig zu verbinden.

Beim Ultraschallschweißen handelt es sich um eine spezielle Ausprägung des Reibschweißens, bei dem zu verschweißende Komponenten als Fügepartner mit Oberflächen aneinander in Anlage gebracht und unter geringem Druck und hochfrequenten mechanischen Schwingungen gegeneinander bewegt werden. Die Schwingungen können mithilfe einer Sonotrodenanordnung erzeugt werden, in der Ultraschallschwingungen mit Frequenzen von typischerweise 20 kHz bis 50 kHz erzeugt und auf wenigstens einen der Fügepartner übertragen werden. Durch plastisches Fließen können sich die Fügepartner dann oberflächennah ineinander verzahnen oder verhaken, ohne dass die Materialien der Fügepartner notwendigerweise schmelzen. Durch Ultraschallschweißen können Fügepartner daher schonend, schnell und wirtschaftlich miteinander verbunden werden.

Ultraschallschweißen kann insbesondere auch zum Verschweißen von metallischen Fügepartnern wie zum Beispiel zum Verschweißen von mehreren Litzen von Kabeln miteinander, zum verschweißenden Kompaktieren von einzelnen Adern innerhalb einer Litze, zum Verschweißen von einer oder mehreren Litzen mit Kontaktelementen und/oder zum Verschweißen von Blechen eingesetzt werden. Hierzu werden die Fügepartner im Allgemeinen in einen Aufnahmeraum einer Ultraschallschweißeinrichtung eingelegt und anschließend zwischen einem Sonotrodenkopf einer Ultraschall-schwingenden Sonotrode und einem Amboss miteinander verschweißt. Der Aufnahmeraum kann hierbei an entgegengesetzten Seiten von weiteren Komponenten wie einem Touchierelement und einem Seitenschieber begrenzt werden.

Beim Ultraschallschweißen kommt es typischerweise zu einem Verschleiß an Komponenten der Ultraschallschweißeinrichtung. Beispielsweise kann reibungsbedingter Verschleiß an einer Oberfläche einer der Komponenten innerhalb der Ultraschallschweißeinrichtung dazu führen, dass eine dort ursprünglich vorgesehene Textur verrundet oder anderweitig modifiziert wird, sodass z.B. Ultraschallschwingungen weniger effizient auf Fügepartner übertragen werden können. Der Verschleiß kann dazu führen, dass Schweißverbindungen nicht mehr vorgegebenen Anforderungen genügen.

Dementsprechend sollte ein Zustand der Komponenten der Ultraschallschweißeinrichtung überwacht werden, um unter anderem einen solchen Verschleiß rechtzeitig erkennen zu können. Es kann auch eine Eingriffsgrenze bzw. Verschleißgrenze definiert sein und erkannt werden, wann eine solche Grenze erreicht wird und dementsprechend Wartungsmaßnahmen initiiert werden.

Auch andere Einflüsse können eine Wirkweise und/oder Leistungsfähigkeit einer Ultraschallschweißeinrichtung beeinflussen. Beispielsweise können unterschiedliche Typen von Komponenten, d.h. zum Beispiel unterschiedlich ausgestaltete Sonotroden, Ambosse, etc., in der Ultraschallschweißeinrichtung eingesetzt werden, um diese an verschiedene Einsatzbedürfnisse anpassen zu können. Auch bezüglich eines korrekten Einsatzes solcher Komponententypen kann es vorteilhaft sein, den Zustand der Ultraschallschweißeinrichtung zu überwachen.

Herkömmlich wird das Überwachen der Ultraschallschweißeinrichtung meist von einem menschlichen Bediener der Einrichtung oder von einem Wartungstechniker durchgeführt. Eine technisch geschulte Person kann hierbei zum Beispiel übermäßige Verschleißerscheinungen erkennen und daraufhin beispielsweise eine Wartung der Ultraschallschweißeinrichtung und/oder einen Austausch einer verschlissenen Komponente veranlassen. Die Person kann auch erkennen, ob ein gewünschter Komponententyp in der Ultraschallschweißeinrichtung eingesetzt wird. Allerdings erfordert eine solche von Personen durchzuführende Überwachung einen hohen Personalaufwand und/oder unterliegt dem Risiko menschlicher Fehler. Außerdem erfordert zum Beispiel das Erkennen von Verschleißerscheinungen eine hohe Qualifikation auf Seiten der Person. Selbst erfahrene Personen können graduelle Unterschiede in Verschleißerscheinungen jedoch meist nicht präzise erkennen, wodurch meist kein präzise qualifizierter Rückschluss auf ein Verschleißstadium möglich ist. Dementsprechend werden verschleißbehaftete Komponenten oft vorsichtshalber bereits in einem frühen Stadium ausgetauscht. Alternativ können Wartungsmaßnahmen eventuell zu spät durchgeführt werden, sodass Schweißverbindungen, die mit einer teilweise verschlissenen Ultraschallschweißeinrichtung erzeugt werden, vorbestimmten Qualitätskriterien nicht mehr genügen können. Auch Aussagen über eine vermutlich verbleibende Restlebensdauer einer Komponente sind meist kaum möglich.

DE 10 2016 110 590 A1 beschreibt eine automatische Bondkraftkalibrierung. US 2015/0168942 A1 beschreibt eine automatisierte Überwachung einer Ausrichtung und eines Verschleißes eines Vibrationsschweißgeräts.

### ZUSAMMENFASSUNG DER ERFINDUNG UND VORTEILHAFTER AUSFÜHRUNGSFORMEN

Es kann daher ein Bedarf an einem Verfahren zum Ermitteln einer Zustandsinformation für eine Ultraschallschweißeinrichtung bestehen, mithilfe dessen zumindest einige der zuvor genannten Defizite überwunden bzw. gemindert werden können. Insbesondere kann ein Bedarf an einem Verfahren bestehen, mithilfe dessen eine Zustandsinformation, die einen Rückschluss über einen Verschleiß von Komponenten und/oder über eine aktuelle Konfiguration der Ultraschallschweißeinrichtung ermöglicht, einfach, zuverlässig, präzise und/oder kostengünstig ermittelt werden kann. Insbesondere sollte die Zustandsinformation vorzugsweise automatisiert ermittelt werden können. Ferner kann ein Bedarf an einer Ultraschallschweißeinrichtung bestehen, die dazu konfiguriert ist, ein solches Verfahren auszuführen. Außerdem kann ein Bedarf an einem Computerprogrammprodukt bestehen, mithilfe dessen eine Ultraschallschweißeinrichtung dazu angeleitet werden kann, ein solches Verfahren auszuführen, sowie an einem computerlesbaren Medium, auf dem ein derartiges Computerprogrammprodukt gespeichert ist.

Einem solchen Bedarf kann mit dem Gegenstand eines der unabhängigen Ansprüche entsprochen werden. Vorteilhafte Ausführungsformen sind in den abhängigen Ansprüchen sowie der nachfolgenden Beschreibung definiert und in den Figuren veranschaulicht.

Ein erster Aspekt der Erfindung betrifft ein Verfahren zum Ermitteln einer Zustandsinformation für eine Ultraschallschweißeinrichtung. Die Zustandsinformation gibt hierbei eine Information über einen aktuellen Zustand zumindest einer Komponente der Ultraschallschweißeinrichtung an. Die Ultraschallschweißeinrichtung weist mehrere Komponenten und einen Aufnahmeraum auf. Die Komponenten umfassend eine Sonotrode und/oder einen Amboss und/oder ein Touchierelement und/oder einen Seitenschieber. In dem Aufnahmeraum sind Fügepartner aufzunehmen. Der Aufnahmeraum wird an einer ersten Seite von einer Oberfläche einer ersten der Komponenten, insbesondere der Sonotrode, und an einer der ersten Seite gegenüberliegenden zweiten Seite von einer Oberfläche einer zweiten der Komponenten, insbesondere des Ambosses, begrenzt. Der Aufnahmeraum wird optional ferner an einer dritten Seite von einer Oberfläche einer dritten der Komponenten, insbesondere des Touchierelements, und an einer der dritten Seite gegenüberliegenden vierten Seite von einer Oberfläche einer vierten der Komponenten, insbesondere des Seitenschiebers begrenzt. Zumindest die erste der Komponenten und die der ersten Komponente gegenüberliegende zweite der Komponenten sind relativ zueinander in einer ersten Verlagerungsrichtung hin zu einander verlagerbar und relativ zueinander in einer quer zu der ersten Verlagerungsrichtung gerichteten zweiten Verlagerungsrichtung verlagerbar. Die erste Komponente und die zweite Komponente sind in der ersten Verlagerungsrichtung derart relativ zueinander verlagerbar, dass eine Gegenkraft, die entgegen der ersten Verlagerungsrichtung auf die erste Komponente wirkt, eine vorbestimmte Maximalkraft erreicht. Das Verfahren weist zumindest folgende Verfahrensschritte auf, vorzugsweise in der angegebenen Reihenfolge:
(a) Verlagern der ersten Komponente und der zweiten Komponente relativ zueinander, ausgehend von einer anfänglichen Position, in der ersten Verlagerungsrichtung und Erkennen einer ersten Anschlagposition, an der die auf die erste Komponente beim Verlagern wirkende Gegenkraft die vorbestimmte Maximalkraft erreicht;
(b) Verlagern der ersten Komponente und der zweiten Komponente relativ zueinander in der zweiten Verlagerungsrichtung in eine geänderte Position; und
(c) erneutes Verlagern der ersten Komponente und der zweiten Komponente relativ zueinander, ausgehend von der geänderten Position, in der ersten Verlagerungsrichtung und Erkennen einer zweiten Anschlagposition, an der die auf die erste Komponente beim Verlagern wirkende Gegenkraft die vorbestimmte Maximalkraft erreicht;
(d) Ermitteln der Zustandsinformation basierend auf der erkannten ersten und zweiten Anschlagposition.

Gemäß einem zweiten Aspekt der Erfindung wird eine Ultraschallschweißeinrichtung beschrieben, welche die vorangehend für den ersten Aspekt beschriebenen strukturellen und funktionalen Merkmale aufweist und die dazu konfiguriert ist, das Verfahren gemäß einer Ausführungsform des ersten Aspekts der Erfindung auszuführen oder zu kontrollieren.

Gemäß einem dritten Aspekt der Erfindung wird ein Computerprogrammprodukt beschrieben, welches Anweisungen umfasst, welche bei Ausführung auf einem Prozessor diesen dazu veranlassen, in einer Ultraschallschweißeinrichtung gemäß einer Ausführungsform des zweiten Aspekts der Erfindung eine Ausführungsform des Verfahrens gemäß dem ersten Aspekt der Erfindung auszuführen oder zu kontrollieren.

Gemäß einem vierten Aspekt der Erfindung wird ein computerlesbares Medium mit einem darauf gespeicherten Computerprogrammprodukt gemäß dem dritten Aspekt der Erfindung beschrieben.

Kurz und grob zusammengefasst kann ein Grundgedanke zu der hierin beschriebenen Idee darin gesehen werden, dass eine Verlagerbarkeit der Komponenten, die den Aufnahmeraum der Ultraschallschweißeinrichtung begrenzen, dazu genutzt wird, um Informationen über einen aktuellen Zustand dieser Komponenten, insbesondere einen Verschleißzustand, ermitteln zu können. Jeweils zwei der Komponenten liegen sich hierbei mit Oberflächen, die den Aufnahmeraum begrenzen, gegenüber. Zumindest zwei der Komponenten können hierbei nicht nur in einer ersten Richtung aufeinander zu und voneinander weg verlagert werden, sondern auch in einer hierzu quer, vorzugsweise senkrecht, verlaufenden zweiten Richtung. In der ersten Richtung können die beiden Komponenten dabei verlagert werden, bis sie miteinander direkt oder indirekt in Anschlag kommen. Eine Position, an der ein solcher Anschlag auftritt und bei der eine vorbestimmte Maximalkraft zwischen den beiden Komponenten wirkt, kann als Anschlagposition detektiert werden. Indem Anschlagpositionen für zumindest zwei, vorzugsweise mehrere, bezogen auf die zweite Richtung unterschiedliche Positionierungen der beiden Komponenten ermittelt werden, kann eine Art Höhenprofil oder Oberflächenprofil ermittelt werden, dass Anschlagpositionen in der ersten Richtung für verschiedene Positionierungen der beiden Komponenten relativ zueinander in der zweiten Richtung wiedergibt. Aus einem solchen Höhenprofil bzw. Oberflächenprofil kann eine Information über den aktuellen Zustand der Komponenten, insbesondere eine Information über einen aktuellen Zustand zumindest einer Oberfläche der zueinander gerichteten Oberflächen beider Komponenten ermittelt werden.

Nachfolgend werden mögliche Details zu Ausgestaltungen des hierin vorgeschlagenen Verfahrens und der zu dessen Ausführung konfigurierten Ultraschallschweißeinrichtung erläutert.

Die hierin beschriebene Ultraschallschweißeinrichtung ist dazu konfiguriert, Fügepartner, die in deren Aufnahmeraum aufgenommen werden, miteinander zu verschweißen, indem Ultraschallenergie auf die Fügepartner übertragen wird. Der Aufnahmeraum ist hierbei zumindest von zwei gegenüberliegenden Seiten her, vorzugsweise sogar von vier Seiten ringförmig von Komponenten der Ultraschallschweißeinrichtung umgeben. Die Komponenten begrenzen den typischerweise quaderförmigen Aufnahmeraum somit an zumindest zwei Seiten, vorzugsweise an vier Seiten. Von typischerweise zwei offen verbleibenden Seiten her können die Fügepartner dann in den Aufnahmeraum eingeführt werden.

Konkret dienen als Komponenten um den Aufnahmeraum herum zumindest eine Sonotrode sowie weitere Komponenten wie insbesondere ein Amboss, ein Touchierelement und ein Seitenschieber. Die Sonotrode kann durch einen Schwingungsgeber in Ultraschallschwingungen versetzt werden. Eine zu dem Aufnahmeraum gerichtete Oberfläche der Sonotrode kann texturiert sein, d.h. mit einem Profil versehen sein, um die Ultraschallschwingungen effizient auf die Fügepartner übertragen zu können. Diese Oberfläche der Sonotrode begrenzt den Aufnahmeraum gemäß der hierin verwendeten Definition an dessen erster Seite. Gegenüber der Sonotrode befindet sich im Allgemeinen der Amboss. Dieser kann an der zweiten Seite des Aufnahmeraums als Gegenlager für die Fügepartner dienen, sodass die Fügepartner während des Schweißvorgangs zwischen der Sonotrode und dem Amboss beklemmt werden können. Auch eine zu dem Aufnahmeraum gerichtete Oberfläche des Amboss kann texturiert sein. Typischerweise senkrecht zu der Richtung, in der sich die Sonotrode und der Amboss gegenüber liegen, liegen sich das Touchierelement und der Seitenschieber gegenüber und begrenzen dort mit ihren Oberflächen den Aufnahmeraum an dessen definitionsgemäßer dritten und vierten Seite. Der Begriff "Touchierelement" ist hierbei breit auszulegen und kann sowohl eine Touchierplatte als auch einen weiteren Seitenschieber bezeichnen, gegen deren Oberfläche der erste Seitenschieber verfahren werden kann, um auf diese Weise den Aufnahmeraum in seiner Breite zu verengen, um darin aufgenommene Fügepartner von der Seite her zu begrenzen . Zu dem Aufnahmeraum gerichtete Oberflächen des Touchierelements und des Seitenschiebers sind typischerweise eben, können jedoch in einigen Anwendungsfällen auch eine Oberflächentextur wie z.B. eine Riffelung aufweisen.

Die den Aufnahmeraum begrenzenden Komponenten sind im Rahmen vorgegebener Freiheitsgrade relativ zueinander verlagerbar. Zum Beispiel können üblicherweise die Sonotrode und der Amboss relativ zueinander aufeinander zu bzw. voneinander weg bewegt werden. Dabei kann die Sonotrode stationär bleiben und der Amboss bewegt werden oder, alternativ, der Amboss stationär bleiben und die Sonotrode bewegt werden oder, als weitere Alternative, sowohl die Sonotrode als auch der Amboss bewegt werden. Weiterhin können üblicherweise das Touchierelement und der Seitenschieber relativ zueinander aufeinander zu bzw. voneinander wegbewegt werden. Auch hier kann eine der beiden Komponenten stationär bleiben und die andere verlagert werden oder, alternativ, beide Komponenten verlagert werden.

Eine Verlagerungsrichtung, in der zwei einander gegenüberliegende Komponenten aufeinander zu bzw. voneinander weg verlagert werden, wird hierin generell als erste Verlagerungsrichtung bezeichnet. Die erste Verlagerungsrichtung bezogen auf die Verlagerung der Sonotrode relativ zu dem Amboss verläuft hierbei quer, vorzugsweise senkrecht, zu der ersten Verlagerungsrichtung bezogen auf die Verlagerung des Touchierelements relativ zu dem Seitenschieber. Durch das Verlagern gegenüberliegender Komponenten in deren jeweiliger erster Verlagerungsrichtung kann der Aufnahmeraum verengt bzw. geweitet werden.

Die Ultraschallschweißeinrichtung ist hierbei derart konfiguriert, dass eine erste Komponente und eine dieser gegenüberliegende zweite Komponente in deren erster Verlagerungsrichtung derart relativ zueinander verlagerbar sind, dass eine Gegenkraft, die während des Verlagerns entgegen der ersten Verlagerungsrichtung auf die Komponenten wirkt, eine vorbestimmte Maximalkraft erreicht, vorzugsweise aber die vorbestimmte Maximalkraft nicht übersteigt. Anders ausgedrückt können die beiden Komponenten verlagert werden, bis sie in direkten oder indirekten Anschlag miteinander kommen. Das Erreichen des Anschlags und eine dabei eingenommene Position der Komponenten können detektiert werden. Dies kann beispielsweise dadurch erreicht werden, dass ein Antrieb, mithilfe dessen eine oder beide der Komponenten verlagert werden, zumindest die vorbestimmte Maximalkraft ausüben kann, vorzugsweise maximal die vorbestimmte Maximalkraft ausüben kann. Alternativ kann eine Sensorik vorgesehen sein, mithilfe derer die Gegenkraft gemessen werden kann und der Antrieb bei Überschreiten der vorbestimmten Maximalkraft begrenzt bzw. gestoppt wird. Die beim Erreichen des Anschlags eingenommene Position kann z.B. aus einer Steuerung, welche einen Antrieb der Komponenten steuert, ausgelesen werden oder mithilfe eines Positionssensors aufgenommen werden.

Zumindest eine oder einige der Komponenten sind zusätzlich zu der Verlagerbarkeit in der ersten Verlagerungsrichtung auch in einer hierzu quer verlaufenden, vorzugsweise senkrecht verlaufenden, zweiten Verlagerungsrichtung verlagerbar. Anders ausgedrückt ist eine solche Komponente nicht nur mit ihrer den Aufnahmeraum begrenzenden Oberfläche hin zu der ihr gegenüberliegenden Komponente verlagerbar, das heißt orthogonal zu dieser Oberfläche, sondern auch quer, insbesondere senkrecht, dazu. Die zweite Verlagerungsrichtung kann hierbei vorzugsweise parallel zu der den Aufnahmeraum begrenzenden Oberfläche der betreffenden Komponente verlaufen.

Um eine gewünschte Information über den aktuellen Zustand einer oder mehrerer Komponenten der Ultraschallschweißeinrichtung zu erhalten, können die vorangehend beschriebenen Verlagerungsfähigkeiten der Komponenten sowie die Fähigkeit, einen direkten oder indirekten Anschlag zwischen relativ zueinander aufeinander zu bewegten Komponenten detektieren zu können, genutzt werden.

Hierzu werden eine erste und eine zweite Komponente in deren erster Verlagerungsrichtung aufeinander zu bewegt. Beispielsweise kann der Amboss als erste Komponente auf die Sonotrode als zweite Komponente zubewegt werden. Der Amboss kann beispielsweise oberhalb der Sonotrode angeordnet sein, sodass die erste Verlagerungsrichtung vertikal nach unten verläuft. Die Verlagerungsbewegung kann hierbei von einer anfänglichen Position, in der die erste Komponente und die zweite Komponente anfänglich positioniert sind, beginnen. Die beiden Komponenten werden so lange in der ersten Verlagerungsrichtung aufeinander zu bewegt, bis sie direkt oder indirekt in Kontakt miteinander kommen, sodass sich eine der Verlagerung entgegen gerichtete Gegenkraft aufbaut. Sobald diese Gegenkraft die vorbestimmte Maximalkraft erreicht, wird davon ausgegangen, dass die beiden Komponenten direkt oder indirekt miteinander auf Anschlag gefahren sind. Eine dabei von einer der beiden oder von beiden Komponenten eingenommene Position bzw. Relativposition wird als erste Anschlagposition erkannt und registriert.

Nach dem Registrieren der ersten Anschlagposition wird noch eine zweite Anschlagposition ermittelt. Dazu können die beiden Komponenten zunächst zumindest geringfügig in der ersten Verlagerungsrichtung voneinander weg bewegt werden, um den zuvor eingenommenen Anschlag zu lösen. Anschließend können die beiden Komponenten relativ zueinander in der zweiten Verlagerungsrichtung verlagert werden, bis sie eine geänderte Position einnehmen. Anders ausgedrückt können die beiden Komponenten in einer Querrichtung, d.h. vorzugsweise parallel zu ihren einander gegenüberliegenden Oberflächen, relativ zueinander versetzt werden. Ausgehend von dieser geänderten Position bzw. Relativpositionierung werden die beiden Komponenten dann in einem weiteren Verlagerungsvorgang wieder in der ersten Verlagerungsrichtung relativ zueinander aufeinander zu bewegt, bis die Gegenkraft die vorbestimmte Maximalkraft erreicht und somit ein Anschlag erkannt wird. Die eingenommene Position einer der Komponenten bzw. Relativposition beider Komponenten wird als zweite Anschlagposition erkannt und registriert.

Anhand der auf diese Weise registrierten ersten und zweiten Anschlagposition kann dann ein Rückschluss auf die zu ermittelnde Zustandsinformation erfolgen. Beispielsweise kann, wie weiter unten detaillierter beschrieben, erkannt werden, wo sich die erste Anschlagposition relativ zu der zweiten Anschlagposition befindet und aus dieser Relativpositionierung können Rückschlüsse über den Zustand von Komponenten innerhalb der Ultraschallschweißeinrichtung gezogen werden. Alternativ können, wie ebenfalls weiter unten detaillierter beschrieben, über die Zeit hin mehrere Zustandsinformationen ermittelt werden und untereinander verglichen werden, um aus Veränderungen Rückschlüsse auf zwischenzeitlich eingetretenen Verschleiß ziehen zu können.

Beispielsweise kann erkannt werden, wenn sich die zweite Anschlagposition bezogen auf die erste Verlagerungsrichtung stark von der ersten Anschlagposition unterscheidet und dies kann als Indikator für das Vorliegen eines Höhenunterschieds erkannt werden. Der Höhenunterschied kann beispielsweise aus einer Stufe oder einer Vertiefung resultieren, die sich an einer der in Anschlag kommenden Oberflächen der ersten und/oder zweiten Komponente befinden. Eine solche Stufe oder Vertiefung kann Resultat einer Verschleißwirkung sein und eine Höhe der Stufe bzw. Tiefe der Vertiefung kann einen Rückschluss auf einen vorliegenden lokalen Verschleiß ermöglichen. Somit kann eventuell basierend auf einer einzigen Ermittlung der Zustandsinformation bereits auf das Vorliegen übermäßigen Verschleißes rückgeschlossen werden.

Alternativ oder ergänzend kann beobachtet werden, wie sich die beiden Anschlagpositionen im Laufe der Zeit ändern und hieraus Rückschlüsse über den aktuellen Zustand der Komponenten gezogen werden. Beispielsweise kann erkannt werden, dass sich eine oder beide Anschlagpositionen mit der Zeit verlagern und/oder ihre relativen Positionen zueinander mit der Zeit verändern. Dies kann als Indikator gewertet werden, dass sich die in Anschlag kommenden Oberflächen der beiden Komponenten mit der Zeit verändern, beispielsweise aufgrund von Verschleiß. Die über die Zeit hin erfolgende Veränderung der Anschlagpositionen kann hierbei ein Maß für bereits aufgetretenen Verschleiß bieten. Beispielsweise kann eine aktuell ermittelte Zustandsinformation mit einem vorbekannten Ausgangszustand, insbesondere einem Neuzustand, oder einem Grenzzustand, ab dem von übermäßigem Verschleiß auszugehen ist, verglichen werden.

Gemäß einer Ausführungsform werden bei dem Verfahren gemäß dem ersten Aspekt der Erfindung die Verfahrensschritte (b) und (c) mehrfach wiederholt, um eine Mehrzahl von zweiten Anschlagpositionen für verschiedene Positionen der ersten Komponente relativ zu der zweiten Komponente zu erkennen. In Verfahrensschritt (d) wird dann die Zustandsinformation basierend auf der erkannten ersten Anschlagposition und der Mehrzahl von zweiten Anschlagpositionen ermittelt.

Anders ausgedrückt werden die erste und die zweite Komponente vorzugsweise mehrfach in der zweiten Verlagerungsrichtung in geänderte Positionen verlagert und dann dort jeweils die Anschlagposition ermittelt, indem beide Komponenten in der ersten Verlagerungsrichtung bis in einen Anschlag gefahren werden. Auf diese Weise können an mehreren Stellen entlang der Oberflächen, an denen die erste und die zweite Komponente mit ihren zueinander gerichteten Seiten aufeinandertreffen, Anschlagpositionen ermittelt werden. Insgesamt kann hierdurch eine Art Höhenprofil bzw. Oberflächenprofil entlang dieser Oberflächen aufgezeichnet werden. Ein solches Höhenprofil bzw. Oberflächenprofil enthält Informationen, die Rückschluss über einen Verschleiß an den betreffenden Oberflächen oder, allgemeiner, die Form dieser Oberflächen zulassen, sodass qualitativ oder sogar quantitativ auf den aktuellen Zustand der betroffenen Komponente(n) rückgeschlossen werden kann.

Gemäß einer Ausführungsform werden in den Verfahrensschritten (a) und (c) die erste Komponente und die zweite Komponente relativ zueinander verlagert, bis eine der zweiten Komponente gegenüberliegende Oberfläche der ersten Komponente die zweite Komponente kontaktiert.

Mit anderen Worten können zum Ermitteln der Anschlagpositionen die beiden Komponenten so lange aufeinander zu bewegt werden, bis sie sich direkt berühren. Der sich einstellende direkte Kontakt der gegenüberliegenden Oberflächen beider Komponenten führt dann dazu, dass einer weiteren Verlagerung entlang der ersten Verlagerungsrichtung eine erhebliche Gegenkraft entgegenwirkt, sodass, sobald diese Gegenkraft die vorbestimmte Maximalkraft erreicht, die entsprechende Anschlagposition erkannt werden kann.

Alternativ kann gemäß einer Ausführungsform vor Ausführen des Verfahrensschritts (a) und/oder des Verfahrensschritts (c) ein Matrizenelement in den Aufnahmeraum eingebracht werden. In den Verfahrensschritten (a) und (c) können dann die erste Komponente und die zweite Komponente relativ zueinander verlagert werden, bis das Matrizenelement mit einer zu der ersten Komponente gerichteten Oberfläche die erste Komponente kontaktiert und mit einer zu der zweiten Komponente gerichteten Oberfläche die zweite Komponente kontaktiert.

Das Matrizenelement ist ein Körper, der in den Aufnahmeraum passt und ein Teilvolumen des Aufnahmeraums ausfüllt. Das Matrizenelement kann auch als Schablone bezeichnet werden. Das Matrizenelement kann für die Durchführung des hierin beschriebenen Verfahrens temporär in den Aufnahmeraum eingebracht werden, beispielsweise indem ein Bediener oder eine Maschine das Matrizenelement von einer der offenen Seiten her in den Aufnahmeraum einschiebt. Dabei ist das Matrizenelement vorzugsweise ausreichend formstabil, um sich bei auf das Matrizenelement wirkenden Kräften zumindest bis hin zu der vorbestimmten Maximalkraft nicht bzw. nicht wesentlich zu verformen. Beispielsweise kann das Matrizenelement ein Vollkörper oder ein Hohlkörper sein, zum Beispiel aus einem mechanisch belastbaren Material wie zum Beispiel einem Metall. Dementsprechend können die erste und die zweite Komponente, wenn sie aufeinander zu bewegt werden, dass Matrizenelement zwischen sich einklemmen, d.h., über das Matrizenelement indirekt miteinander in Anschlag kommen. Die hierbei wirkende Gegenkraft wird dann über das Matrizenelement auf die jeweilige andere Komponente übertragen. Sobald die Gegenkraft die vorbestimmte Maximalkraft erreicht, wird die jeweilige Anschlagposition erkannt. Die Anschlagposition bezieht sich dabei auf Positionen der beiden Komponenten in Bezug auf das zwischen ihnen angeordnete Matrizenelement. Da Dimensionen des Matrizenelements vorab sehr genau gemessen werden können bzw. bekannt sein können, kann die Anschlagposition für beide Komponenten genau bestimmt werden.

Gemäß einer konkretisierten Ausführungsform kann das Matrizenelement entweder an der ersten Komponente oder an der zweiten Komponente befestigt werden.

Anders ausgedrückt kann das Matrizenelement während der Durchführung des hierin beschriebenen Verfahrens temporär an einer der aufeinander zu zu verlagernden Komponenten angebracht werden, sodass das Matrizenelement zusammen mit dieser Komponente positioniert bzw. verlagert wird. Beispielsweise kann das Matrizenelement an der Sonotrode angebracht werden, sodass es von einer zu dem Amboss gerichteten Oberfläche der Sonotrode hin zu dem Amboss abragt. Während das Matrizenelement somit positionsfest relativ zu der Sonotrode ist, kann der Amboss relativ zu der Sonotrode und somit relativ zu dem Matrizenelement in der zweiten Verlagerungsrichtung bewegt werden. Das Matrizenelement kann insbesondere derart ausgestaltet sein, dass es lösbar und/oder ohne Werkzeug an der Komponente befestigt werden kann.

Gemäß einer konkretisierten Ausführungsform kann das Matrizenelement an einer Seite, die zu der ersten Komponente oder der zweiten Komponente gerichtet ist, eine geringere Breite aufweist als die von dem Matrizenelement kontaktierte Oberfläche der ersten bzw. zweiten Komponente.

Mit anderen Worten kann das Matrizenelement an einer Seite, die hin zu einer der Komponenten gerichtet ist, bezüglich derer die Anschlagposition ermittelt werden soll, eine geringere Breite aufweisen als diejenige Oberfläche der jeweiligen Komponente, die von dem Matrizenelement kontaktiert werden soll. Beispielsweise kann ein Matrizenelement, mit dessen Hilfe die zu dem Aufnahmeraum gerichtete Oberfläche der Sonotrode abgetastet werden soll, an derjenigen Seite des Matrizenelements, die zu der Sonotrode gerichtet ist, schmaler sein als die abzutastende Oberfläche der Sonotrode.

Das Matrizenelement kann somit, wenn die erste und die zweite Komponente aufeinander zu bewegt werden, über eine wesentlich schmalere Oberfläche mit der gegenüberliegenden Komponente in Kontakt treten als dies der Fall wäre, wenn die Komponenten direkt miteinander in Kontakt kämen. Die schmale Seite des Matrizenelements kann somit ähnlich wie ein Fühler oder eine Sonde kleinflächig die Oberfläche der ersten oder der zweiten Komponente "abtasten".

Gemäß einer weiteren konkretisierten Ausführungsform kann das Matrizenelement an einer zu der ersten Komponente gerichteten Seite oder an einer zu der zweiten Komponente gerichteten Seite eine größere Breite aufweisen als an einer hierzu entgegengesetzten Seite.

Anders ausgedrückt kann das Matrizenelement eine breite und eine schmale Seite aufweisen. Die schmale Seite kann beispielsweise eine Breite von weniger als 50 %, vorzugsweise weniger als 20 % oder sogar weniger als 10 % der Breite der breiten Seite aufweisen. Anders ausgedrückt kann die schmale Seite des Matrizenelements beispielsweise weniger als die Hälfte der Breite, vorzugsweise weniger als 20 % der Breite oder sogar weniger als 10 % der Breite der Oberfläche, an der sich das Matrizenelement abstützt, aufweisen. Die schmale Seite kann z.B. als schmaler Vorsprung, als schmale Ausbuchtung oder als Spitze an dem Matrizenelement ausgebildet sein. Mit der breiten Seite kann das Matrizenelement zum Beispiel an der ersten oder zweiten Komponente anliegen und sich an dieser abstützen und eventuell an der Komponente befestigt sein. Die schmale Seite kann hin zu der Oberfläche der jeweils anderen Komponente gerichtet sein und diese Oberfläche zum Erkennen der Anschlagposition lediglich kleinflächig kontaktieren. Dementsprechend kann das Matrizenelement mit seiner schmalen Seite zum Beispiel auch in kleine beziehungsweise schmale lokale Vertiefungen eindringen, sodass eine Anschlagposition mit Bezug auf solche Vertiefungen erkannt werden kann.

Vorangehend wurden die Verlagerungsmöglichkeiten der verschiedenen Komponenten innerhalb der Ultraschallschweißeinrichtung sehr allgemein beschrieben. Prinzipiell sollte zumindest eine von zwei sich gegenüberliegenden Komponenten in ihrer jeweiligen ersten Verlagerungsrichtung hin zu der gegenüberliegenden Komponente verlagert werden können. D.h. eine Komponente wie zum Beispiel der Amboss, die sich oberhalb ihrer gegenüberliegenden Komponente wie zum Beispiel der Sonotrode befindet, sollte sich in der ersten Verlagerungsrichtung vertikal nach unten verlagern lassen und/oder die andere Komponente sollte sich vertikal nach oben verlagern lassen. Eine Komponente wie zum Beispiel der Seitenschieber, die sich seitlich neben ihrer gegenüberliegenden Komponente wie zum Beispiel dem Touchierelement befindet, sollte sich in der ersten Verlagerungsrichtung horizontal hin zu der anderen Komponente verlagern lassen. Zusätzlich kann zumindest eine der Komponenten oder vorzugsweise zwei oder mehr Komponenten einen weiteren Bewegungsfreiheitsgrad dahingehend aufweisen, dass sich die Komponente auch in der zweiten Verlagerungsrichtung verlagern lässt. Eine Verlagerung der Komponenten kann dabei beispielsweise durch Stellmotoren bewirkt und von einer Steuerung gesteuert werden.

Bei der konkreten Konstruktion der Ultraschallschweißeinrichtung können solche generellen Verlagerungsmöglichkeiten jedoch eingeschränkt sein, d.h. nicht jede der Komponenten kann unabhängig von allen anderen Komponenten verlagerbar sein. Stattdessen können einzelne der Komponenten miteinander zusammenwirken und zumindest in einzelnen Verlagerungsrichtungen gemeinsam verlagert werden.

Gemäß einer Ausführungsform kann zum Beispiel der Amboss relativ zu der Sonotrode in einer ersten Richtung und quer hierzu in einer zweiten Richtung verlagerbar sein, das Touchierelement an dem Amboss in der ersten Richtung festgelegt sein und in der zweiten Richtung relativ zu dem Amboss verlagerbar sein, und der Seitenschieber in der ersten Richtung stationär relativ zu der Sonotrode gehalten sein und in der zweiten Richtung relativ zu der Sonotrode verlagerbar sein.

Mit anderen Worten können die verschiedenen Komponenten innerhalb der Ultraschallschweißeinrichtung in unterschiedlicher Weise jeweils von einem oder mehreren Aktuatoren wie zum Beispiel Stellmotoren verlagert werden und dabei in unterschiedlicher Weise in ihrer Bewegung geführt sein. Bei der beschriebenen Ausführungsform kann der Amboss sowohl in der ersten als auch in der zweiten Richtung verlagert werden. Die Verlagerung des Amboss kann dabei insbesondere unabhängig von der Position der Sonotrode und unabhängig von der Position des Seitenschiebers erfolgen. Das Touchierelement wirkt jedoch mit dem Amboss derart zusammen, dass es in der ersten Richtung an dem Amboss festgelegt ist und somit nur zusammen mit dem Amboss in der ersten Richtung bewegbar ist. In der zweiten Richtung kann das Touchierelement jedoch relativ zu dem Amboss verlagert werden. Der Seitenschieber wiederum kann mit Bezug zu der Sonotrode derart gehalten sein, dass er stationär relativ zu der Sonotrode bleibt. Sofern die Sonotrode selbst stationär fixiert ist, bleibt somit auch der Seitenschieber bezogen auf die erste Richtung stationär. Allerdings kann der Seitenschieber quer hierzu in der zweiten Richtung relativ zu der Sonotrode verlagert werden.

Die beschriebene Ausgestaltung der Komponenten und ihrer Verlagerungsfreiheitsgrade kann in vorteilhafter Weise in der Ultraschallschweißeinrichtung implementiert sein, indem beispielsweise der Amboss oberhalb der Sonotrode angeordnet ist und mittels zweier Aktuatoren in der ersten und der zweiten Richtung bewegt werden kann. Die erste Richtung entspricht hierbei der Vertikalen und die zweite Richtung der Horizontalen. Das Touchierelement ist an dem Amboss angebracht und wird mit diesem zusammen in der ersten Richtung bewegt, kann darüber hinaus jedoch unabhängig von dem Amboss auch durch einen eigenen Aktuator in der zweiten Richtung, d.h. horizontal, verlagert werden. Die Sonotrode kann in der Ultraschallschweißeinrichtung stationär gehalten sein und braucht somit nicht notwendigerweise einen Verlagerungsaktuator aufweisen. Der Seitenschieber kann in der zweiten Richtung relativ zu der Sonotrode verlagert werden und hierfür einen Aktuator aufweisen.

Bei einer derartigen Ausgestaltung der Ultraschallschweißeinrichtung kann gemäß einer konkretisierten Ausführungsform in Verfahrensschritt (a) der Amboss, ausgehend von der anfänglichen Position, in der ersten Richtung hin zu der Sonotrode verlagert werden, in Verfahrensschritt (b) der Amboss in der zweiten Richtung in die geänderte Position verlagert werden, und in Verfahrensschritt (c) der Amboss, ausgehend von der geänderten Position, in der ersten Richtung hin zu der Sonotrode verlagert werden.

Insgesamt kann hierdurch der Amboss in verschiedene seitliche Positionen, d.h. Positionen an verschiedenen Positionierungen entlang der zweiten Richtung, verfahren werden und jeweils dort dann bis in Anschlag mit der Sonotrode verlagert werden. Auf diese Weise kann ein Überlappungsbereich zwischen der Sonotrode und dem Amboss sukzessive abgetastet werden. Die hierbei aufgenommenen Anschlagpositionen können ein Höhenprofil der Sonotrode und/oder des Amboss in diesem Überlappungsbereich wiedergeben. Dieses Höhenprofil kann eine Information über den Verlauf der Oberfläche an der Sonotrode und/oder dem Amboss beinhalten und somit eine Ermittlung einer Information über den Zustand dieser Komponenten ermöglichen.

Alternativ kann bei einer konkretisierten Ausführungsform vor Ausführen des Verfahrensschritts (a) und/oder des Verfahrensschritts (c) ein Matrizenelement in den Aufnahmeraum eingebracht werden. In Verfahrensschritt (a) kann dann der Seitenschieber, ausgehend von der anfänglichen Position, in der zweiten Richtung hin zu dem Touchierelement verlagert werden, in Verfahrensschritt (b) das Touchierelement in der ersten Richtung in die geänderte Position verlagert werden, und in Verfahrensschritt (c) der Seitenschieber in der ersten Richtung hin zu dem Touchierelement in der geänderten Position verlagert werden.

Insgesamt kann hierdurch der Seitenschieber in verschiedene Höhenpositionen, das heißt Positionen an verschiedenen Positionierungen entlang der ersten Richtung, relativ zu dem Touchierelement verfahren werden und jeweils dort dann in der zweiten Richtung bis in indirekten Anschlag mit dem Touchierelement verlagert werden, das heißt soweit hin zu dem Touchierelement verlagert werden, bis er an dem dazwischen befindlichen Matrizenelement anstößt. Auf diese Weise kann ein Überlappungsbereich zwischen dem Seitenschieber und dem Touchierelement sukzessive abgetastet werden.

Dabei kann das Matrizenelement vorteilhafterweise derart ausgestaltet sein, d.h. beispielsweise mit einem hin zu dem Touchierelement gerichteten Vorsprung versehen sein, dass Unebenheiten in dem Touchierelement kleinflächig erkannt werden können. Die hierbei aufgenommenen Anschlagpositionen können ein Oberflächenprofil des Touchierelements und/oder des Seitenschiebers in dem Überlappungsbereich wiedergeben. Dieses Oberflächenprofil kann eine Information über den Verlauf der Oberfläche an dem Touchierelement bzw. an dem Seitenschieber beinhalten und somit eine Ermittlung einer Information über den Zustand dieser Komponenten ermöglichen.

Gemäß einer Ausführungsform wird die bei dem Verfahren ermittelte Zustandsinformation auf typische Charakteristiken hin untersucht, welche auf einen vorbekannten Zustand von zumindest einer der Komponenten hindeuten. Bei Erkennen einer typischen Charakteristik wird ein Vorgang initiiert, ausgewählt aus der Gruppe umfassend:
- Veranlassen einer Wartung der Ultraschallschweißeinrichtung;
- Veranlassen eines Austauschs wenigstens einer der Komponenten der Ultraschallschweißeinrichtung;
- Berechnen einer verbleibenden Lebensdauer wenigstens einer Komponente der Ultraschallschweißeinrichtung, optional unter Berücksichtigung der erkannten typischen Charakteristik;
- Ausgeben eines das Vorliegen des vorbekannten Zustands angebenden Signals;
- Plausibilisieren eines korrekten Einsatzes der in der Ultraschallschweißeinrichtung eingesetzten Komponenten;
- Aufnehmen eines Kamerabildes von wenigstens einer Komponente der Ultraschall schweißeinrichtung.

Anders ausgedrückt kann die Zustandsinformation, die zuvor aus den erkannten wenigstens zwei Anschlagpositionen ermittelt wurde, daraufhin analysiert werden, ob die Anschlagpositionen typische Werte aufweisen, die charakteristisch für einen vorbestimmten Zustand einer der Komponenten sind. Die Werte können dabei Absolutwerte oder Relativwerte zwischen den jeweiligen Anschlagpositionen sein. Beispielsweise kann analysiert werden, ob die Absolutwerte der Anschlagpositionen vorgegebene Grenzwerte überschreiten oder unterschreiten. Insbesondere können die Absolutwerte beispielsweise mit vorgegebenen Referenzwerten verglichen werden. Das Verhalten der Absolutwerte kann dabei zum Beispiel charakteristisch für bestimmte Verschleißerscheinungen an den Komponenten und/oder für bestimmte geometrische Ausprägungen der Komponenten sein. Alternativ können die Unterschiede zwischen Anschlagpositionen, insbesondere zwischen benachbarten Anschlagpositionen, analysiert werden. Solche Unterschiede können charakteristisch für bestimmte zu ermittelnde Zustände der Komponenten, insbesondere für bestimmte Verschleißerscheinungen und/oder geometrische Ausprägungen der Komponenten, sein.

Sofern aufgrund einer solchen Analyse erkannt wird, dass mit hoher Wahrscheinlichkeit zum Beispiel ein übermäßiger Verschleiß an einer Komponente aufgetreten ist, können eine oder mehrere Vorgänge initiiert, das heißt geeignete Maßnahmen eingeleitet, werden.

Zum Beispiel kann veranlasst werden, dass ein Techniker die Ultraschallschweißeinrichtung wartet. Der Techniker kann dabei die im Rahmen des vorgestellten Verfahrens ermittelte Zustandsinformationen durch Inspektion der Ultraschallschweißeinrichtung vor Ort überprüfen. Bei Erkennen beispielsweise übermäßiger Verschleißerscheinungen bzw. bei Erkennen, dass eine vordefinierte Verschleißgrenze erreicht wurde, kann dann eine Instandsetzung durchgeführt werden, in deren Rahmen beispielsweise verschlissene Komponenten nachbearbeitet werden können.

Alternativ können eine oder mehrere der Komponenten als Reaktion auf die ermittelte Zustandsinformation auch ausgetauscht werden.

Ferner kann eine Erkenntnis über eine typische Charakteristik der Zustandsinformation auch dazu benutzt werden, um eine verbleibende Lebensdauer einer oder mehrerer Komponenten der Ultraschallschweißeinrichtung zu ermitteln. Dabei kann die erkannte typische Charakteristik gegebenenfalls berücksichtigt werden. Beispielsweise können anhand der ermittelten Zustandsinformation Rückschlüsse über bereits aufgetretenen Verschleiß an einer Komponente gezogen werden. Sofern dieser Verschleiß aus der Zustandsinformation quantifizierbar abgeleitet werden kann, kann hieraus ein Rückschluss über einen noch möglichen weiteren, zukünftigen Verschleiß gezogen werden und somit analysiert werden, wie lange die betroffene Komponente voraussichtlich noch betriebsfähig ist, bevor sie ausgetauscht oder repariert werden muss. Eine solche Information kann im Rahmen einer vorausschauenden Wartung (englisch: "predictive maintenance") genutzt werden, beispielsweise um Wartungsvorgänge vorab planen zu können.

Ergänzend kann für den Fall, dass durch Analyse der Zustandsinformation ein vorbekannter charakteristischer Zustand erkannt wird, ein entsprechendes Signal ausgegeben werden. Dieses Signal kann beispielsweise einem Bediener der Ultraschallschweißeinrichtung oder einem Techniker eine Information liefern, die ihn auf den erkannten Zustand hinweist. Beispielsweise kann ein Signal in optischer und/oder akustischer Weise ausgegeben werden, um dem Bediener bzw. Techniker zu signalisieren, dass die Ultraschallschweißeinrichtung gewartet werden sollte oder eine solche Wartung in Kürze ansteht. Alternativ oder ergänzend kann ein Signal an eine andere Maschine oder ein Überwachungszentrum übermittelt werden.

Als weitere mögliche Reaktion auf das Erkennen der typischen Charakteristik kann ein korrekter Einsatz der in der Ultraschallschweißeinrichtung eingesetzten Komponenten plausibilisiert werden. Beispielsweise kann vorgesehen sein, dass in der Ultraschallschweißeinrichtung für verschiedene Anwendungszwecke unterschiedliche Komponenten eingesetzt werden. Zum Beispiel können für bestimmte Schweißeinsätze Sonotroden und/oder Ambosse eingesetzt werden, die eine einsatzspezifische Form aufweisen, beispielsweise in Form einer sogenannten Dombie-Nase. Diese Form kann beim Ermitteln der Anschlagpositionen und des sich daraus ergebenden Höhenprofils bzw. Oberflächenprofils erkannt werden, sodass automatisiert festgestellt werden kann, ob eine Komponente mit einem gewünschten Profil tatsächlich in der Ultraschallschweißeinrichtung eingebaut wurde.

Ferner kann das Erkennen der typischen Charakteristik ein Auslösen einer Kamera bewirken, um ein Kamerabild von wenigstens einer der Komponenten in der Ultraschallschweißeinrichtung aufzunehmen. Die Kamera kann in der Ultraschallschweißeinrichtung integriert sein und geeignet ausgestaltet sein, um zum Beispiel ein Kamerabild von einer verschleißgefährdeten Oberfläche einer Komponente aufnehmen zu können. Mithilfe des aufgenommenen Kamerabildes kann eine optische Kontrolle der Komponente erfolgen und beispielsweise ein im Rahmen des hierin vorgestellten Verfahrens als wahrscheinlich erkannter Zustand der Komponente, insbesondere ein Verschleiß der Komponente, durch ergänzende Analyse des Kamerabildes plausibilisiert werden. Die Kamerabilder können bei Bedarf dokumentiert bzw. archiviert und/oder in ergänzender Weise analysiert werden.

Gemäß einer weiteren Ausführungsform kann alternativ oder zusätzlich zu der vorangehend beschriebenen Untersuchung auf das Vorliegen typischer Charakteristiken die Zustandsinformation zu aufeinander folgenden Zeitpunkten während des Betriebs der Ultraschallschweißeinrichtung mehrfach ermittelt werden. Die ermittelten Zustandsinformationen werden auf typische Veränderungen hin verglichen, welche auf einen vorbekannten Zustand von zumindest einer der Komponenten hindeuten. Bei Erkennen einer typischen Veränderung wird ein Vorgang initiiert, der aus der Gruppe von Möglichkeiten ausgewählt sein kann, die für die vorangehend beschriebene Ausführungsform bereits erläutert wurde.

Mit anderen Worten kann zeitlich nacheinander mehrfach die Zustandsinformation ermittelt werden, indem zu verschiedenen Zeitpunkten jeweils die mindestens zwei Anschlagpositionen detektiert werden. Sofern sich die Oberflächen und/oder die Lage der Komponenten, bezüglich derer die Anschlagpositionen detektiert werden, mit der Zeit verändern, werden sich auch die Anschlagpositionen entsprechend verändern. Durch ein Vergleichen aktuell aufgenommener Anschlagpositionen mit vorangehend aufgenommenen Anschlagpositionen kann somit auf solche Veränderungen rückgeschlossen werden. Hieraus kann zum Beispiel eine Information über einen zwischenzeitlich eingetretenen Verschleiß abgeleitet werden.

Ausführungsformen einer Ultraschallschweißeinrichtung gemäß dem zweiten Aspekt der Erfindung sind dazu konfiguriert, dass hierin beschriebene Verfahren auszuführen oder zu kontrollieren. Hierzu kann die Ultraschallschweißeinrichtung eine Steuerung aufweisen, die beispielsweise Aktuatoren steuert, mithilfe derer die Komponenten der Ultraschallschweißeinrichtung gezielt und kontrolliert in deren erster und/oder zweiter Verlagerungsrichtung verlagert werden können. Die Aktuatoren können in unterschiedlicher Weise ausgestaltet sein, beispielsweise als präzise verlagerbare Stellmotoren, Servomotoren, Pneumatikantriebe, Hydraulikantriebe oder ähnliches. Die Steuerung kann eine mikroelektronische Schaltung umfassen, mithilfe derer Steuersignale generiert und an die Aktuatoren übermittelt werden können. Insbesondere kann die Steuerung programmierbar sein. Hierzu kann die Steuerung einen Prozessor und Datenspeicher aufweisen. Eventuell kann die Steuerung ergänzend über Sensoren verfügen bzw. mit Sensoren kommunizieren.

Die Steuerung kann mittels eines Computerprogrammprodukts gemäß dem dritten Aspekt der Erfindung programmiert werden, um das hierin beschriebene Verfahren in der Ultraschallschweißeinrichtung auszuführen oder zu kontrollieren. Das Computerprogrammprodukt kann in einer beliebigen Computersprache programmiert sein.

Das Computerprogrammprodukt kann auf einem computerlesbaren Medium gemäß dem vierten Aspekt der Erfindung gespeichert sein. Ein solches computerlesbares Medium kann beispielsweise ein portables Medium sein. Es kann Daten vorzugsweise nichtflüchtig speichern. Beispielsweise kann das Medium ein Flashspeicher, eine CD, eine DVD, ein ROM, ein EPROM oder Ähnliches sein. Alternativ kann das Medium Teil eines Computers oder Servers sein. Insbesondere kann das Medium Teil einer Datenwolke ("Cloud") sein. Dementsprechend kann das Computerprogrammprodukt von dem computerlesbaren Medium ausgelesen bzw. heruntergeladen werden, beispielsweise über ein Netzwerk wie das Internet.

Es wird darauf hingewiesen, dass hierin mögliche Merkmale und Vorteile von Ausführungsformen der Erfindung teils mit Bezug auf eine Ultraschallschweißeinrichtung und teils mit Bezug auf ein Betriebsverfahren für eine Ultraschallschweißeinrichtung beschrieben sind. Ein Fachmann wird erkennen, dass die für einzelne Ausführungsformen beschriebenen Merkmale in analoger und geeigneter Weise auf andere Ausführungsformen übertragen, angepasst und/oder ausgetauscht werden können, um zu weiteren Ausführungsformen der Erfindung und möglicherweise zu Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert.
Figuren 1(a) - (f) zeigen Ansichten auf Komponenten einer
   Ultraschallschweißeinrichtung in verschiedenen Konfigurationen während aufeinanderfolgenden Schritten eines Verfahrens gemäß einem Ausführungsbeispiel der Erfindung zum Aufnehmen eines Höhenprofils an der Sonotrode und/oder an dem Amboss.
Figuren 2(a) - (c) zeigen Ansichten auf Komponenten einer
   Ultraschallschweißeinrichtung mit einem in den Aufnahmeraum eingebrachten Matrizenelement in verschiedenen Konfigurationen während aufeinanderfolgenden Schritten eines Verfahrens gemäß einem Ausführungsbeispiel der Erfindung zum Aufnehmen eines Höhenprofils an dem Amboss.
Figur 3 zeigt ein Höhenprofil, wie es mittels des Verfahrens gemäß einem Ausführungsbeispiel der Erfindung aufgenommen wurde.
Figuren 4(a) - (d) zeigen Ansichten auf Komponenten einer
   Ultraschallschweißeinrichtung mit einem in den Aufnahmeraum eingebrachten Matrizenelement in verschiedenen Konfigurationen während aufeinanderfolgenden Schritten eines Verfahrens gemäß einem Ausführungsbeispiel der Erfindung zum Aufnehmen eines Oberflächenprofils an dem Touchierelement.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

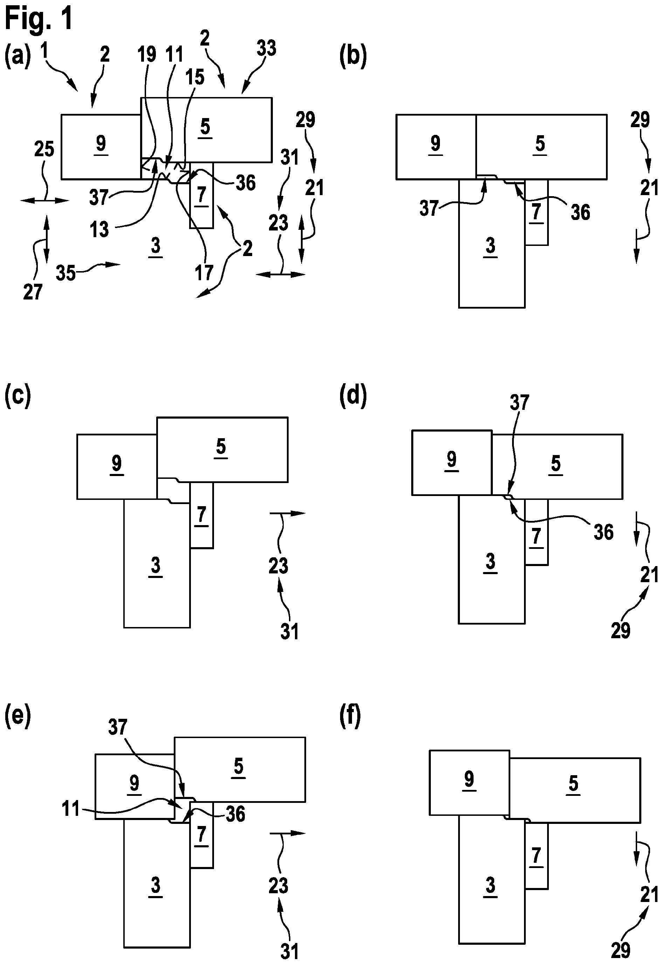

In Figur 1 ist eine Ultraschallschweißeinrichtung 1 in verschiedenen Stadien während der Durchführung eines Verfahrens zum Ermitteln einer Zustandsinformation gemäß einer Ausführungsform der vorliegenden Erfindung dargestellt.

Die Ultraschallschweißeinrichtung 1 umfasst mehrere Komponenten 2, die relativ zueinander verlagerbar sind. Insbesondere umfasst die Ultraschallschweißeinrichtung 1 eine Sonotrode 3, einen Amboss 5, ein Touchierelement 7 und einen Seitenschieber 9. Diese Komponenten 2 umgeben einen Aufnahmeraum 11, in dem Fügepartner (nicht dargestellt) aufgenommen werden können, um sie anschließend miteinander zu verschweißen. Dabei wird der Aufnahmeraum 11 an einer ersten Seite von unten her von einer Oberfläche 13 der Sonotrode 3 und an einer der ersten Seite gegenüberliegenden zweiten Seite von oben her von einer Oberfläche 15 des Amboss 5 begrenzt. Ferner wird der Aufnahmeraum 11 an einer dritten Seite von rechts her von einer Oberfläche 17 des Touchierelements 7 und an einer gegenüberliegenden vierten Seite von links her von einer Oberfläche 19 des Seitenschiebers 9 begrenzt.

Zumindest einige der Komponenten 2 sind relativ zu anderen der Komponenten 2 verlagerbar. Hierzu können die betreffenden Komponenten 2 beispielsweise von einem Stellantrieb angetrieben werden, der von einer Steuerung gesteuert wird (jeweils nicht dargestellt).

Im dargestellten Beispiel kann der Amboss 5 in einer ersten Verlagerungsrichtung 21 relativ zu der Sonotrode 3 vertikal verlagert werden. Die vertikale erste Verlagerungsrichtung 21 wird bei der in Figur 1 dargestellten Ausgestaltung auch als erste Richtung 29 bezeichnet. Außerdem kann der Amboss 5 in einer zweiten Verlagerungsrichtung 23 relativ zu der Sonotrode 3 horizontal verlagert werden. Die horizontale zweite Verlagerungsrichtung 23 wird bei der dargestellten Ausgestaltung auch als zweite Richtung 31 bezeichnet. Das Touchierelement 7 ist an dem Amboss 5 in der ersten Richtung 29 festgelegt, kann aber in der zweiten Richtung 31 relativ zu dem Amboss 5 verlagert werden. Der Seitenschieber 9 ist in der ersten Richtung 29 relativ zu der Sonotrode 3 stationär gehalten, kann aber in der zweiten Richtung 31 relativ zu der Sonotrode 3 verlagert werden. Dabei kann der Seitenschieber 9 relativ zu dem ihm gegenüberliegenden Touchierelement 7 in einer horizontalen ersten Verlagerungsrichtung 25 bewegt werden. Indem das Touchierelement 7 zusammen mit dem Amboss 5 in vertikaler Richtung 29 verlagert wird, können ferner der Seitenschieber 9 und das Touchierelement 7 in einer zweiten Verlagerungsrichtung 27 relativ zueinander bewegt werden.

Einander gegenüberliegende Komponenten 2 können hierbei derart relativ zueinander verlagert werden, dass eine zwischen diesen Komponenten 2 wirkende Gegenkraft, welche erzeugt wird, wenn die Komponenten 2 direkt oder indirekt in Anschlag miteinander kommen, eine Maximalkraft erreichen kann. Bei Erreichen dieser Maximalkraft kann somit darauf rückgeschlossen werden, dass die betreffenden Komponenten 2 in Anschlag miteinander gekommen sind. Eine dabei eingenommene Position einer oder beider der Komponenten 2 kann als Anschlagposition erkannt werden.

Mit Bezug auf die Figuren 1(a) bis (f) wird nun eine Sequenz von Verfahrensschritten erläutert, mittels derer eine Zustandsinformation ermittelt werden kann, die eine Information über den aktuellen Zustand zumindest einer der Komponenten 2 angibt. Im dargestellten Beispiel soll als Zustandsinformation eine Information über einen Verlauf der zu dem Amboss 5 gerichteten Oberfläche 13 der Sonotrode 3 und/oder der zu der Sonotrode 3 gerichteten Oberfläche 15 des Amboss 5 ermittelt werden. Der Amboss 5 wird in diesem Fall als erste Komponente 33 bezeichnet, wohingegen die gegenüberliegende Sonotrode 3 als zweite Komponente 35 bezeichnet wird.

Wie in Figur 1(a) dargestellt, sind die Komponenten 2 in einer anfänglichen Konfiguration derart angeordnet, dass der Amboss 5 mit seiner Oberfläche 15 von der Sonotrode 3 mit ihrer Oberfläche 13 beabstandet ist und das Touchierelement 7 mit seiner Oberfläche 17 von dem Seitenschieber 9 mit seiner Oberfläche 19 beabstandet ist, sodass der Aufnahmeraum 11 relativ groß ist.

Ausgehend von dieser Konfiguration wird, wie in Figur 1(b) veranschaulicht, der Amboss 5 mitsamt dem daran gehaltenen Touchierelement 7 in der ersten Verlagerungsrichtung 21 vertikal auf die Sonotrode 3 zu verlagert, bis beide Komponenten 2 in Anschlag miteinander kommen, d.h. sich in diesem Fall direkt berühren, sodass eine Gegenkraft einer weiteren Verlagerung des Ambosses 5 entgegenwirkt. Sobald diese Gegenkraft eine vorgegebene Maximalkraft erreicht, wird die dabei eingenommene Position des Ambosses 5 als erste Anschlagposition aufgenommen.

Anschließend wird, wie in Figur 1(c) dargestellt, der Amboss 5 wieder von der Sonotrode 3 entfernt. Anschließend wird der Amboss 5 relativ zu der Sonotrode 3 in der horizontalen zweiten Verlagerungsrichtung 23 in eine geänderte Position verlagert. Hierzu kann der Seitenschieber 9 in der zweiten Verlagerungsrichtung 23 in Richtung auf das Touchierelement 7 zu bewegt werden.

Von dieser geänderten Position ausgehend wird der Amboss 5 dann erneut in der ersten Verlagerungsrichtung 21 vertikal auf die Sonotrode 3 zu verlagert, wie in Figur 1(d) veranschaulicht. Sobald beide Komponenten 2 in Anschlag kommen und die Gegenkraft die vorgegebene Maximalkraft erreicht, wird die zweite Anschlagposition erkannt.

Die in den Figuren 1(c) und (d) dargestellten Verfahrensschritte können gegebenenfalls mehrfach wiederholt werden und dabei der Amboss 5 sukzessive immer weiter in der horizontalen zweiten Verlagerungsrichtung 23 verlagert werden und jeweils Anschlagpositionen ermittelt werden.

In den Figuren 1(e) und (f) ist eine Konfiguration gezeigt, bei der der Amboss 5 bereits so weit in der horizontalen zweiten Verlagerungsrichtung 23 verlagert wurde, dass sich die Oberfläche 15 des Amboss 5 und die Oberfläche 13 der Sonotrode 3 nur noch geringfügig seitlich überlappen. In dieser Konfiguration weist der Aufnahmeraum 11 somit nur noch eine geringe Breite auf, wobei die Breite in etwa derjenigen Breite entsprechen kann, wie sie auch beim Verschweißen von Fügepartnern typischerweise eingenommen wird. Beim Verschweißen kann aufgrund von dabei ausgeübtem Druck und Reibung ein Verschleiß an den Komponenten 2 auftreten. Wie in den Figuren 1(a) - (f) dargestellt, kann aufgrund solchen Verschleißes beispielsweise eine Vertiefung 36 oder eine Kerbe an der Oberfläche 13 der Sonotrode und/oder eine Vertiefung 37 oder eine Kerbe an der Oberfläche 15 des Ambosses 5 auftreten. Da der Amboss 5 und die Sonotrode 3 in der dargestellten Konfiguration nur noch in einem Bereich überlappen, in dem sich zumindest eine dieser Vertiefungen 36, 37 befindet, findet der Kontakt zwischen dem Amboss 5 und der Sonotrode 3 an einer geringfügig anderen Anschlagposition statt, als dies für die vorherigen Konfigurationen (wie in den Figuren 1(a) - (d) dargestellt) der Fall war. Dieser Unterschied bei der gemessenen Anschlagposition kann somit eine Information bezüglich der durch Verschleiß erzeugten einen oder zwei Vertiefungen 36, 37 liefern.

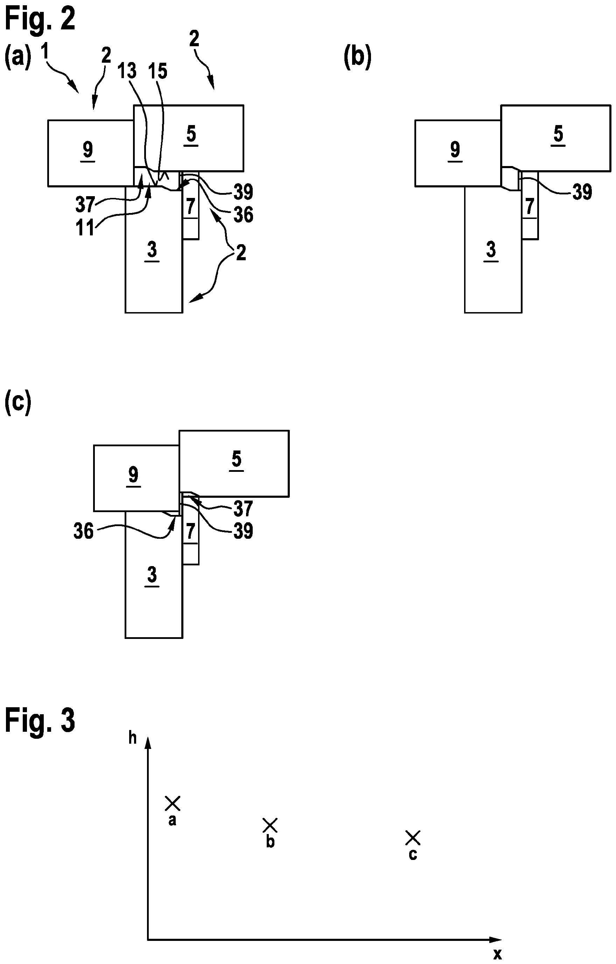

In den Figuren 2(a) - (c) ist eine alternative Ausführungsform des hierin beschriebenen Verfahrens dargestellt, bei der in den Aufnahmeraum 11 zwischen den Komponenten 2 der Ultraschallschweißeinrichtung 1 ein Matrizenelement 39 eingefügt ist. Im dargestellten Beispiel kann das Matrizenelement 39 beispielsweise an der Sonotrode 3 befestigt sein. Beispielsweise kann das Matrizenelement 39 an einem maximal von dem Seitenschieber 9 entfernten Rand der Sonotrode 3 angeordnet sein. Dabei kann das Matrizenelement 39 an der Oberfläche 13 der Sonotrode im Bereich einer verschleißbedingten Vertiefung 36 angeordnet sein. Das Matrizenelement 39 kann hierbei über die Oberfläche 13 der Sonotrode 3 nach oben hin zu dem Amboss 5 ragen. Das Matrizenelement 39 weist vorzugsweise eine geringe Breite auf, um die gegenüberliegende Oberfläche 15 des Ambosses 5 in einem schmalen Bereich lokal berühren bzw. abtasten zu können. Insbesondere kann die Breite des Matrizenelements 39 kleiner sein als die Breite der damit zu kontaktierenden Oberfläche 15 des Amboss 5.

Bei der in Figur 2 dargestellten alternativen Ausführungsform werden der Amboss 5 und die Sonotrode 3 ähnlich wie bei der in Figur 1 dargestellten Ausführungsform mehrfach vertikal aufeinander zu bewegt und dazwischen jeweils horizontal in verschiedene Positionen relativ zueinander verlagert. Allerdings kommt der Amboss 5 mit seiner Oberfläche 15 dabei nicht direkt in Anlage mit der Oberfläche 13 der Sonotrode 3. Stattdessen wird das Matrizenelement 39 beim Annähern beider Komponenten 2 zwischen diesen eingeklemmt und berührt mit seinen oben- und untenliegenden Enden die einander gegenüberliegenden Oberflächen 13, 15 der Sonotrode 3 und des Ambosses 5. Das Einklemmen des Matrizenelements 39 führt zu einem Ansteigen der beim Annähern der beiden Komponenten 2 bewirkten Gegenkraft, sodass bei Überschreiten der vorgegebenen Maximalkraft auch in diesem Fall eine Anschlagposition genau ermittelt werden kann. Dabei können, wie insbesondere in Figur 2(c) gut zu erkennen, aufgrund der geringen Breite des Matrizenelements 39 auch schmale Vertiefungen 36, 37 an den in Anlage kommenden Oberflächen 13, 15 erkannt werden.

In Figur 3 ist ein Höhenprofil dargestellt, wie es mithilfe des hierin beschriebenen Verfahrens aufgenommen werden kann. An verschiedenen Positionen x entlang der horizontalen Verlagerungsrichtung 23 wurden hierbei in entsprechenden Höhen h Anschlagpositionen a, b, c ermittelt. Die verschiedenen Positionen entsprechen dabei den Konfigurationen, wie sie in den Figuren 1(b), (d), (f) bzw. in den Figuren 2(a), (b), (c) dargestellt sind. Es ist zu erkennen, dass der zuletzt aufgenommene Datenpunkt c eine geringere Höhe angibt als die vorangehenden Datenpunkte a, b. Hieraus kann geschlussfolgert werden, dass bei Aufnahme des Datenpunkts c der Amboss 5 und die Sonotrode 3 weiter aufeinander zu gefahren werden konnten als bei Aufnahme der anderen Datenpunkte. Dies kann als typisches Charakteristikum dafür erkannt werden, dass bei einer der Komponenten 2 wie beispielsweise dem Amboss 5 ein Zustand in Form einer lokalen Vertiefung 37 im Bereich rund um die Position (c) vorherrscht. Ein solcher Zustand kann vorbekannt sein und typisch für Verschleißerscheinungen sein, wie sie in Ultraschallschweißeinrichtungen 1 auftreten können.

Sofern mehr als die in dem Beispiel dargestellten drei Datenpunkte aufgenommen werden, können die Datenpunkte sogar ein ausreichend hoch aufgelöstes Höhenprofil angeben, aus dem Informationen über die Position, die Breite, die Tiefe und/oder den Verlauf einer oder zweier Vertiefungen 36, 37 als Zustandsinformation abgeleitet werden können.

Alternativ oder ergänzend können Zustandsinformationen auch an aufeinanderfolgenden Zeitpunkten aufgenommen werden. Beispielsweise kann das hierin beschriebene Verfahren regelmäßig in vorgegebenen Zeitabständen oder nach einer vorgegebenen Betriebsdauer durchgeführt werden und die Anschlagpositionen als Zustandsinformationen abgespeichert werden. Alternativ kann das Verfahren regelmäßig nach Absolvieren einer vorgegebenen Anzahl von Schweißvorgängen oder nachdem festgestellt wurde, dass durch zwischenzeitlich durchgeführte Schweißvorgänge eine vorbestimmte Energiemenge verbraucht wurde, durchgeführt werden und die Anschlagpositionen als Zustandsinformationen abgespeichert werden. Dabei können aktuell aufgenommene Zustandsinformationen mit vorangehend abgespeicherten Zustandsinformationen verglichen werden. Aus dabei beobachteten Veränderungen können Rückschlüsse auf den zu überwachenden Zustand der Komponenten 2 innerhalb der Ultraschallschweißeinrichtung 1 gezogen werden.

Bei Bedarf kann das hierin beschriebene Verfahren einmal ohne das Matrizenelement 39, d.h. wie in Fig. 1 veranschaulicht, und einmal mit dem Matrizenelement 39, d.h. wie in Fig. 2 veranschaulicht, durchgeführt werden. Bei der Durchführung, bei der kein Matrizenelement 39 in dem Aufnahmeraum 11 aufgenommen ist, wird hierbei für den Fall, dass der Amboss 5 und die Sonotrode 3 sich ausschließlich im Bereich ihrer jeweiligen Vertiefungen 36, 37 überlappen (siehe Fig. 1(f)), bei Erreichen der Anschlagposition eine Höheninformation generiert, welche durch die Summe der beiden Vertiefungen 36, 37 sowohl an der Sonotrode 3 als auch an dem Amboss 5 beeinflusst wird. Im Gegensatz hierzu wird bei der Durchführung, bei der ein Matrizenelement 39 in dem Aufnahmeraum 11 aufgenommen ist, für den Fall, dass der Amboss 5 und die Sonotrode 3 sich ausschließlich im Bereich ihrer jeweiligen Vertiefungen 36, 37 überlappen, bei Erreichen der Anschlagposition eine Höheninformation generiert, welche im dargestellten Beispiel lediglich durch die Vertiefungen 37 an dem Amboss 5 beeinflusst wird. Durch Subtraktion beider Höheninformationen voneinander kann letztlich eine Höheninformation erzeugt werden, welche die Vertiefung 36 an der Sonotrode 3 wiedergibt. Anstatt das Matrizenelement 39 an der Sonotrode 3 festzulegen, wie in Fig. 2 veranschaulicht, kann das Matrizenelement 39 alternativ auch an dem Amboss befestigt werden, sodass in diesem Fall dann Vertiefungen 36 an der Sonotrode 3 erfasst werden können.

Bei Erkennen einer typischen Charakteristik in einer Zustandsinformation bzw. einer typischen Veränderung zwischen zeitlich sequenziell aufgenommenen Zustandsinformationen kann dies als Indiz für Veränderungen an einer oder mehrerer der Komponenten 2 dienen und geeignete Reaktionen können eingeleitet werden. Es kann zum Beispiel gegen einen Referenzwert bzw. ein Referenzhöhenprofil verglichen werden. Dabei kann eventuell eine Verschleißgrenze dargestellt werden. Bei Überschreiten der Verschleißgrenze kann eine Wartung veranlasst werden. Es kann auch eine vorausschauende Wartung geplant werden, wenn zum Beispiel ein Auftreten eines übermäßigen Verschleißes basierend auf den aktuell ermittelten Zustandsinformationen in naher Zukunft erwartet werden kann. Beispielsweise kann nach Durchführen einer vorbestimmten Anzahl von Schweißvorgängen eine erfindungsgemäße Ermittlung der Zustandsinformation durchgeführt werden und dann eine Schätzung erfolgen, wie lange die Komponenten 2 noch zu verwenden sind. Es können auch Zwischenschritte durchgeführt werden, um eine Art Vorhersage zu erstellen. Defekte Komponenten 2 können rechtzeitig erkannt werden.

Insgesamt kann eine zu lange Werkzeugverwendung vermieden werden. Verschleißgrenzen können rechtzeitig erkannt werden. Service und Werkzeugwechsel können besser geplant werden. Menschlicher Einfluss kann minimiert werden. Bei geregeltem Ablauf und Wartungsplänen können Werkzeuge rechtzeitig ersetzt bzw. nachgearbeitet werden. Auffälligkeiten können eventuell mit Folgeprüfungen verbunden werden. Zum Beispiel kann bei Erkennen eines übermäßigen Verschleißes an Komponenten 2 der Ultraschallschweißeinrichtung 1 auch geprüft werden, ob zuletzt mit der Ultraschallschweißeinrichtung 1 geschweißte Fügepartner ordnungsgemäß verschweißt wurden. Bei sehr starken Abweichungen der ermittelten Zustandsinformationen von Sollwerten kann gegebenenfalls die Ultraschallschweißeinrichtung komplett außer Betrieb genommen werden und/oder ein geeignetes Signal ausgegeben werden, um einem Bediener und/oder einem Überwachungssystem eine Information über die erkannten Abweichungen mitzuteilen. Beispielsweise kann ein Warnton ausgegeben werden und/oder ein Warnlicht beispielsweise an einer Warnampel aktiviert werden.

Eventuell kann ergänzend zu einer Ermittlung der Zustandsinformationen, wie sie hierin beschrieben ist, noch zusätzlich über ein integriertes oder externes Kamerasystem eine erkannte Zustandsveränderung wie beispielsweise ein erkannter lokaler Verschleiß an einer der Komponenten 2 plausibilisiert werden. Es kann zum Beispiel bei einer unterschrittenen Grenze eine Aufnahme vom Profil beispielsweise der Oberfläche 15 des Amboss 5 erstellt werden. Mit einer solchen zusätzlichen optischen Kontrolle können weitere Verschleißbilder dokumentiert oder auch zum Auswerten verwendet werden.

Alternativ oder ergänzend kann die Zustandsinformation genutzt werden, um zu erkennen, ob eine korrekte Komponente 2, das heißt zum Beispiel ein Amboss 5 mit einer gewünschten Geometrie (d.h. beispielsweise mit einer Dombie-Nase), in der Ultraschallschweißeinrichtung 1 eingebaut ist. Auch wenn Komponenten 2 in der Ultraschallschweißeinrichtung 1 ausgetauscht wurden, kann erkannt werden, ob korrekte Komponenten 2 ersetzt wurden und/oder ob diese ordnungsgemäß montiert wurden.

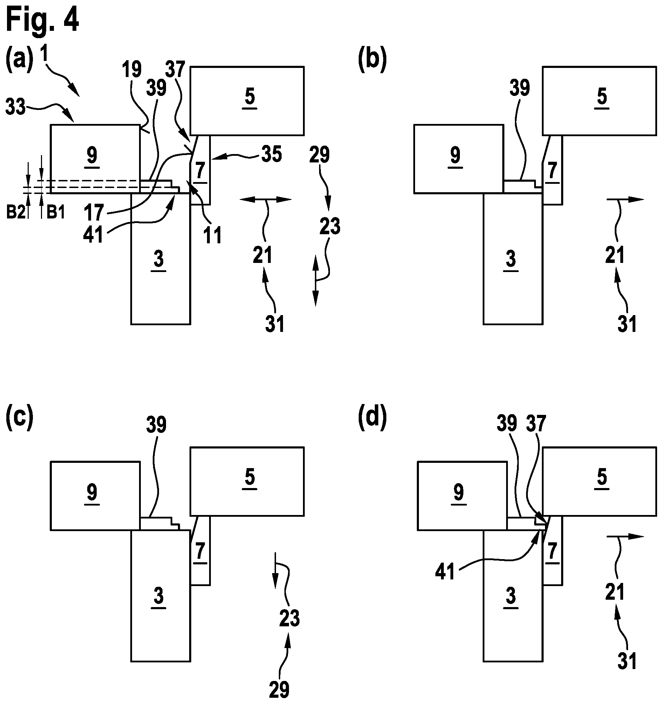

In den Figuren 4(a) - (d) ist eine Sequenz von Schrittfolgen eines Verfahrens gemäß einer alternativen Ausführungsform veranschaulicht. In diesem Fall ist das Verfahren dazu angepasst, eine Zustandsinformation zu ermitteln, anhand derer insbesondere Verschleiß an dem Touchierelement 7 erkannt werden kann. Der Seitenschieber 9 wird in diesem Fall als erste Komponente 33 bezeichnet, wohingegen das gegenüberliegende Touchierelement 7 als zweite Komponente 35 bezeichnet wird.

Bei der beschriebenen Ausführungsform wird ähnlich wie bei der vorangehend beschriebenen Ausführungsform ein Matrizenelement 39 in den Aufnahmeraum 11 eingeführt. Das Matrizenelement 39 weist an einer zu dem Seitenschieber 9 gerichteten Seite eine größere Breite B1 auf als eine Breite B2 an der entgegengesetzten, zu dem Touchierelement 7 gerichteten Seite. Dabei ist der Begriff "Breite" als Dimension in einer Richtung quer zu der ersten Verlagerungsrichtung 21 zu verstehen. Die "erste Verlagerungsrichtung" 21 ist hierbei hierin generell als Bewegungsrichtung der relativ zueinander zu bewegenden ersten und zweiten Komponenten 33, 35, d.h. in diesem Fall als Bewegungsrichtung des Seitenschiebers 9 bzw. des Touchierelements 7 definiert und ist somit in diesem Fall horizontal gerichtet.

Im konkret dargestellten Beispiel ist das Matrizenelement 39 derart ausgestaltet, dass es an der zu dem Aufnahmeraum 11 gerichteten Oberfläche 19 des Seitenschiebers 9 relativ großflächig anliegt und vorzugsweise an dem Seitenschieber 9 befestigt ist. An der entgegengesetzten Seite, welche hin zu der zu dem Aufnahmeraum 11 gerichteten Oberfläche 17 des Touchierelements 7 gerichtet ist, befindet sich ein Vorsprung 41. Dieser Vorsprung 41 weist eine geringe Breite B2 auf bzw. ist verjüngend oder spitz ausgebildet. Dementsprechend kann das Matrizenelement 39 mit dem Vorsprung 41 auch in eventuell vorhandene, kleine Vertiefungen 37 an dem Touchierelement 7 eingreifen.

Figur 4(a) zeigt eine anfängliche Konfiguration, in der die Komponenten 2 weit genug voneinander entfernt sind, sodass in dem Aufnahmeraum 11 das Matrizenelement 39 mit ausreichend seitlichem Spiel eingebracht werden kann.

Von dieser Konfiguration aus wird, wie in Figur 4(b) dargestellt, der Seitenschieber 9 zusammen mit dem Matrizenelement 39 in der horizontalen, ersten Verlagerungsrichtung 21 hin zu dem Touchierelement 7 bewegt, bis der Vorsprung 41 des Matrizenelements 39 die Oberfläche 17 des Touchierelements 7 berührt und sich die Gegenkraft bis zum Erreichen der Maximalkraft aufbaut. Dementsprechend wird eine erste Anschlagposition erkannt.

Nachdem dieser erste Anschlag durch Zurückfahren des Seitenschiebers 9 wieder gelöst wurde, wird das Touchierelement 7 zusammen mit dem Amboss 5 vertikal nach unten verfahren, wie dies in Figur 4(c) dargestellt ist. Anders ausgedrückt werden der Seitenschieber 9 zusammen mit dem Matrizenelement 39 und das Touchierelement 7 relativ zueinander in der vertikalen zweiten Verlagerungsrichtung 23 in eine geänderte Position verlagert.

Ausgehend von dieser geänderten Position wird dann, wie in Figur 4(d) dargestellt, der Seitenschieber 9 zusammen mit dem Matrizenelement 39 erneut in der horizontalen ersten Verlagerungsrichtung 21 nach rechts verlagert. Mit seinem Vorsprung 41 kann das Matrizenelement 39 dabei im Bereich der Vertiefung 37 in Anschlag mit der Oberfläche 17 des Touchierelements 7 gelangen. Anders ausgedrückt kann aufgrund der speziellen Ausgestaltung des Matrizenelements 39 mit dem lokalen Vorsprung 41 die Oberfläche 17 des Touchierelements 7 fein abgetastet werden und etwaige beispielsweise verschleißbedingte Vertiefungen 37 oder Rauigkeiten erkannt werden. Sofern die Verfahrensschritte, wie sie in den Figuren 4(c) und (d) dargestellt sind, mehrfach wiederholt werden und dabei die vertikale Verlagerung in der zweiten Verlagerungsrichtung 23 in kleinen Schritten erfolgt, kann ein ausreichend hoch aufgelöstes Oberflächenprofil der Oberfläche 17 des Touchierelements 7 aufgenommen werden, anhand dessen detaillierte Informationen über den aktuellen Zustand dieses Touchierelements 7 abgeleitet werden können.

### Bezugszeichenliste

- 1: Ultraschallschweißeinrichtung
- 2: Komponenten
- 3: Sonotrodenanordnung
- 5: Amboss
- 7: Touchierelement
- 9: Seitenschieber
- 11: Aufnahmeraum
- 13: Oberfläche der Sonotrode
- 15: Oberfläche des Amboss
- 17: Oberfläche des Touchierelements
- 19: Oberfläche des Seitenschiebers
- 21: erste Verlagerungsrichtung des Amboss relativ zur Sonotrode
- 23: zweite Verlagerungsrichtung des Amboss relativ zur Sonotrode
- 25: erste Verlagerungsrichtung des Seitenschiebers relativ zum Touchierelement
- 27: zweite Verlagerungsrichtung des Seitenschiebers relativ zum Touchierelement
- 29: erste Richtung
- 31: zweite Richtung
- 33: erste Komponente
- 35: zweite Komponente
- 36: Vertiefung
- 37: Vertiefung
- 39: Matrizenelement
- 41: Vorsprung

## Patentansprüche

1. Verfahren zum Ermitteln einer Zustandsinformation für eine Ultraschallschweißeinrichtung (1), wobei die Zustandsinformation eine Information über einen aktuellen Zustand zumindest einer Komponente (2) der Ultraschallschweißeinrichtung (1) angibt,
wobei die Ultraschallschweißeinrichtung (1) aufweist:
- mehrere Komponenten (2) umfassend:
eine Sonotrode (3); und/oder
einen Amboss (5); und/oder
ein Touchierelement (7); und/oder
einen Seitenschieber (9); und
- einen Aufnahmeraum (11), in welchem Fügepartner aufzunehmen sind;
wobei der Aufnahmeraum (11) an einer ersten Seite von einer Oberfläche (13) einer ersten (33) der Komponenten (2), insbesondere der Sonotrode (3), und an einer der ersten Seite gegenüberliegenden zweiten Seite von einer Oberfläche (15) einer zweiten (35) der Komponenten (2), insbesondere des Ambosses (5), begrenzt wird;
wobei der Aufnahmeraum (11) optional ferner an einer dritten Seite von einer Oberfläche (17) einer dritten der Komponenten (2), insbesondere des Touchierelements (7), und an einer der dritten Seite gegenüberliegenden vierten Seite von einer Oberfläche (19) einer vierten der Komponenten (2), insbesondere des Seitenschiebers (9), begrenzt wird;
wobei zumindest die erste (33) der Komponenten (2) und die der ersten Komponente (2) gegenüberliegende zweite (35) der Komponenten (2) relativ zueinander in einer ersten Verlagerungsrichtung (21) hin zu einander verlagerbar sind und relativ zueinander in einer quer zu der ersten Verlagerungsrichtung (21) gerichteten zweiten Verlagerungsrichtung (23) verlagerbar sind;
wobei die erste Komponente (33) und die zweite Komponente (35) in der ersten Verlagerungsrichtung (21) derart relativ zueinander verlagerbar sind, dass eine Gegenkraft, die entgegen der ersten Verlagerungsrichtung (21) auf die erste Komponente (33) wirkt, eine vorbestimmte Maximalkraft erreicht;
wobei das Verfahren folgende Verfahrensschritte aufweist:
(a) Verlagern der ersten Komponente (33) und der zweiten Komponente (35) relativ zueinander, ausgehend von einer anfänglichen Position, in der ersten Verlagerungsrichtung (21) und Erkennen einer ersten Anschlagposition, an der die auf die erste Komponente (33) beim Verlagern wirkende Gegenkraft die vorbestimmte Maximalkraft erreicht;
(b) Verlagern der ersten Komponente (33) und der zweiten Komponente (35) relativ zueinander in der zweiten Verlagerungsrichtung (23) in eine geänderte Position; und
(c) erneutes Verlagern der ersten Komponente (33) und der zweiten Komponente (35) relativ zueinander, ausgehend von der geänderten Position, in der ersten Verlagerungsrichtung (21) und Erkennen einer zweiten Anschlagposition, an der die auf die erste Komponente (33) beim Verlagern wirkende Gegenkraft die vorbestimmte Maximalkraft erreicht;
(d) Ermitteln der Zustandsinformation basierend auf der erkannten ersten und zweiten Anschlagposition.

2. Verfahren nach Anspruch 1,
wobei die Verfahrensschritte (b) und (c) mehrfach wiederholt werden, um eine Mehrzahl von zweiten Anschlagpositionen für verschiedene Positionen der ersten Komponente (33) relativ zu der zweiten Komponente (35) zu erkennen, und
wobei in Verfahrensschritt (d) die Zustandsinformation basierend auf der erkannten ersten Anschlagposition und der Mehrzahl von zweiten Anschlagpositionen ermittelt wird.

3. Verfahren nach einem der Ansprüche 1 und 2,
wobei in den Verfahrensschritten (a) und (c) die erste Komponente (33) und die zweite Komponente (35) relativ zueinander verlagert werden, bis eine der zweiten Komponente (35) gegenüberliegende Oberfläche der ersten Komponente (33) die zweite Komponente (35) kontaktiert.

4. Verfahren nach einem der Ansprüche 1 und 2,
wobei vor Ausführen des Verfahrensschritts (a) und/oder des Verfahrensschritts (c) ein Matrizenelement (39) in den Aufnahmeraum (11) eingebracht wird, und
wobei in den Verfahrensschritten (a) und (c) die erste Komponente (33) und die zweite Komponente (35) relativ zueinander verlagert werden, bis das Matrizenelement (39) mit einer zu der ersten Komponente (33) gerichteten Oberfläche die erste Komponente (33) kontaktiert und mit einer zu der zweiten Komponente (35) gerichteten Oberfläche die zweite Komponente (35) kontaktiert.

5. Verfahren nach Anspruch 4,
wobei das Matrizenelement (39) entweder an der ersten Komponente (33) oder an der zweiten Komponente (35) befestigt wird.

6. Verfahren nach einem der Ansprüche 4 und 5,
wobei das Matrizenelement (39) an einer Seite, die zu der ersten Komponente (33) oder der zweiten Komponente (35) gerichtet ist, eine geringere Breite aufweist als die von dem Matrizenelement (39) kontaktierte Oberfläche der ersten bzw. zweiten Komponente (33, 35).

7. Verfahren nach einem der Ansprüche 4 bis 6,
wobei das Matrizenelement (39) an einer zu der ersten Komponente (33) gerichteten Seite oder an einer zu der zweiten Komponente (35) gerichteten Seite eine größere Breite aufweist als an einer hierzu entgegengesetzten Seite.

8. Verfahren nach einem der vorhergehenden Ansprüche,
wobei der Amboss (5) relativ zu der Sonotrode (3) in einer ersten Richtung (29) und quer hierzu in einer zweiten Richtung (31) verlagerbar ist,
wobei das Touchierelement (7) an dem Amboss (5) in der ersten Richtung (29) festgelegt ist und in der zweiten Richtung (31) relativ zu dem Amboss (5) verlagerbar ist, und
wobei der Seitenschieber (9) in der ersten Richtung (29) stationär relativ zu der Sonotrode (3) gehalten ist und in der zweiten Richtung (31) relativ zu der Sonotrode (3) verlagerbar ist.

9. Verfahren nach Anspruch 8,
wobei in Verfahrensschritt (a) der Amboss (5), ausgehend von der anfänglichen Position, in der ersten Richtung (29) hin zu der Sonotrode (3) verlagert wird,
wobei in Verfahrensschritt (b) der Amboss (5) in der zweiten Richtung (31) in die geänderte Position verlagert wird, und
wobei in Verfahrensschritt (c) der Amboss (5), ausgehend von der geänderten Position, in der ersten Richtung (29) hin zu der Sonotrode (3) verlagert wird.

10. Verfahren nach Anspruch 8,
wobei vor Ausführen des Verfahrensschritts (a) und/oder des Verfahrensschritts (c) ein Matrizenelement (39) in den Aufnahmeraum (11) eingebracht wird,
wobei in Verfahrensschritt (a) der Seitenschieber (9), ausgehend von der anfänglichen Position, in der zweiten Richtung (31) hin zu dem Touchierelement (7) verlagert wird, wobei in Verfahrensschritt (b) das Touchierelement (7) in der ersten Richtung (29) in die geänderte Position verlagert wird, und
wobei in Verfahrensschritt (c) der Seitenschieber (9) in der zweiten Richtung (31) hin zu dem Touchierelement (7) in der geänderten Position verlagert wird.

11. Verfahren nach einem der vorhergehenden Ansprüche,
wobei die ermittelte Zustandsinformation auf typische Charakteristiken hin untersucht wird, welche auf einen vorbekannten Zustand von zumindest einer der Komponenten (2) hindeuten, und
wobei bei Erkennen einer typischen Charakteristik ein Vorgang initiiert wird, ausgewählt aus der Gruppe umfassend:
- Veranlassen einer Wartung der Ultraschallschweißeinrichtung (1);
- Veranlassen eines Austauschs wenigstens einer der Komponenten (2) der Ultraschallschweißeinrichtung (1);
- Berechnen einer verbleibenden Lebensdauer wenigstens einer Komponente (2) der Ultraschallschweißeinrichtung (1), optional unter Berücksichtigung der erkannten typischen Charakteristik;
- Ausgeben eines das Vorliegen des vorbekannten Zustands angebenden Signals;
- Plausibilisieren eines korrekten Einsatzes der in der Ultraschallschweißeinrichtung (1) eingesetzten Komponenten (2);
- Aufnehmen eines Kamerabildes von wenigstens einer Komponente (2) der Ultraschallschweißeinrichtung (1).

12. Verfahren nach einem der vorhergehenden Ansprüche,
wobei die Zustandsinformation zu aufeinander folgenden Zeitpunkten während des Betriebs der Ultraschallschweißeinrichtung (1) mehrfach ermittelt wird und wobei die ermittelten Zustandsinformationen auf typische Veränderungen hin verglichen werden, welche auf einen vorbekannten Zustand von zumindest einer der Komponenten (2) hindeuten, und
wobei bei Erkennen einer typischen Veränderung ein Vorgang initiiert wird, ausgewählt aus der Gruppe umfassend:
- Veranlassen einer Wartung der Ultraschallschweißeinrichtung (1);
- Veranlassen eines Austauschs wenigstens einer der Komponenten (2) der Ultraschallschweißeinrichtung (1);
- Berechnen einer verbleibenden Lebensdauer wenigstens einer Komponente (2) der Ultraschallschweißeinrichtung (1), optional unter Berücksichtigung der erkannten typischen Charakteristik;
- Ausgeben eines das Vorliegen des vorbekannten Zustands angebenden Signals;
- Plausibilisieren eines korrekten Einsatzes der in der Ultraschallschweißeinrichtung (1) eingesetzten Komponenten (2);
- Aufnehmen eines Kamerabildes von wenigstens einer Komponente (2) der Ultraschallschweißeinrichtung (1).

13. Ultraschallschweißeinrichtung (1), aufweisend:
- mehrere Komponenten (2) umfassend:
eine Sonotrode (3); und/oder
einen Amboss (5) und/oder;
ein Touchierelement (7); und/oder
einen Seitenschieber (9); und
- einen Aufnahmeraum (11), in welchem Fügepartner aufzunehmen sind;
wobei der Aufnahmeraum (11) an einer ersten Seite von einer Oberfläche (13) einer ersten (33) der Komponenten (2), insbesondere der Sonotrode (3), und an einer der ersten Seite gegenüberliegenden zweiten Seite von einer Oberfläche (15) einer zweiten (35) der Komponenten (2), insbesondere des Ambosses (5), begrenzt wird;
wobei der Aufnahmeraum (11) ferner optional an einer dritten Seite von einer Oberfläche (17) einer dritten der Komponenten (2), insbesondere des Touchierelements, (7) und an einer der dritten Seite gegenüberliegenden vierten Seite von einer Oberfläche (19) einer vierten der Komponenten (2), insbesondere des Seitenschiebers (9), begrenzt wird;
wobei zumindest eine erste (33) der Komponenten (2) und eine der ersten Komponente (33) gegenüberliegende zweite (35) der Komponenten (2) relativ zueinander in einer ersten Verlagerungsrichtung (21) hin zu einander verlagerbar sind und relativ zueinander in einer quer zu der ersten Verlagerungsrichtung (21) gerichteten zweiten Verlagerungsrichtung (23) verlagerbar sind;
wobei die erste Komponente (33) und die zweite Komponente (35) in der ersten Verlagerungsrichtung (21) derart relativ zueinander verlagerbar sind, dass eine Gegenkraft, die entgegen der ersten Verlagerungsrichtung (21) auf die erste Komponente (33) wirkt, eine vorbestimmte Maximalkraft nicht übersteigt;
wobei die Ultraschallschweißeinrichtung (1) dazu konfiguriert ist, das Verfahren gemäß einem der Ansprüche 1 bis 12 auszuführen oder zu kontrollieren.

14. Computerprogrammprodukt, umfassend Anweisungen, welche bei Ausführung auf einem Prozessor diesen dazu veranlassen, in einer Ultraschallschweißeinrichtung (1) gemäß Anspruch 13 das Verfahren gemäß einem der Ansprüche 1 bis 12 auszuführen oder zu kontrollieren.

15. Computerlesbares Medium mit einem darauf gespeicherten Computerprogrammprodukt gemäß Anspruch 14.

## Claims

1. Method for determining status information for an ultrasonic welding device (1), wherein the status information indicates information about a current status of at least one component (2) of the ultrasonic welding device (1),
wherein the ultrasonic welding device (1) has
- a plurality of components (2) comprising:
a sonotrode (3); and/or
an anvil (5); and/or
a touching element (7); and/or
a lateral slider (9); and
- a receiving space (11) in which joining partners are to be received;
wherein the receiving space (11) is bounded on a first side by a surface (13) of a first (33) of the components (2), in particular the sonotrode (3), and on a second side opposite the first side by a surface (15) of a second (35) of the components (2), in particular the anvil (5);
wherein the receiving space (11) is optionally further bounded on a third side by a surface (17) of a third of the components (2), in particular the touching element (7), and on a fourth side opposite the third side by a surface (19) of a fourth of the components (2), in particular the lateral slider (9);
wherein at least the first (33) of the components (2) and the second (35) of the components (2) opposite the first component (2) are displaceable relative to one another in a first displacement direction (21) towards one another and are displaceable relative to one another in a second displacement direction (23) directed transversely to the first displacement direction (21);
wherein the first component (33) and the second component (35) are displaceable relative to each other in the first displacement direction (21) in such a way that a counterforce acting on the first component (33) against the first displacement direction (21) reaches a predetermined maximum force;
wherein the method comprises the following method steps:
(a) displacing the first component (33) and the second component (35) relative to each other, starting from an initial position, in the first displacement direction (21) and recognising a first stop position at which the counterforce acting on the first component (33) during displacement reaches the predetermined maximum force;
(b) displacing the first component (33) and the second component (35) relative to each other in the second displacement direction (23) to a changed position; and
(c) displacing the first component (33) and the second component (35) relative to each other again, starting from the changed position, in the first displacement direction (21) and recognising a second stop position at which the counterforce acting on the first component (33) during displacement reaches the predetermined maximum force;
(d) determining the status information based on the recognised first and second stop positions.

2. Method according to claim 1,
wherein the method steps (b) and (c) are repeated several times in order to recognise a plurality of second stop positions for different positions of the first component (33) relative to the second component (35), and
wherein in method step (d) the status information is determined based on the recognised first stop position and the plurality of second stop positions.

3. Method according to any one of claims 1 and 2,
wherein in method steps (a) and (c) the first component (33) and the second component (35) are displaced relative to each other until a surface of the first component (33) opposite the second component (35) contacts the second component (35).

4. Method according to one of claims 1 and 2,
wherein a matrix element (39) is introduced into the receiving space (11) before carrying out method step (a) and/or method step (c), and
wherein the first component (33) and the second component (35) are displaced relative to one another in method steps (a) and (c), until the matrix element (39) contacts the first component (33) with a surface directed towards the first component (33) and contacts the second component (35) with a surface directed towards the second component (35).

5. Method according to claim 4,
wherein the matrix element (39) is attached either to the first component (33) or to the second component (35).

6. Method according to one of claims 4 and 5,
wherein the matrix element (39) has a smaller width on a side facing the first component (33) or the second component (35) than the surface of the first or second component (33, 35) contacted by the matrix element (39).

7. Method according to one of claims 4 to 6,
wherein the matrix element (39) has a greater width on a side directed towards the first component (33) or on a side directed towards the second component (35) than on a side opposite thereto.

8. Method according to one of the preceding claims,
wherein the anvil (5) is displaceable relative to the sonotrode (3) in a first direction (29) and transversely thereto in a second direction (31),
wherein the touching element (7) is fixed to the anvil (5) in the first direction (29) and is displaceable relative to the anvil (5) in the second direction (31), and
wherein the lateral slider (9) is held stationary relative to the sonotrode (3) in the first direction (29) and is displaceable relative to the sonotrode (3) in the second direction (31).

9. method according to claim 8,
wherein in method step (a) the anvil (5), starting from the initial position, is displaced in the first direction (29) towards the sonotrode (3),
wherein in method step (b) the anvil (5) is displaced in the second direction (31) to the changed position, and
wherein in method step (c) the anvil (5), starting from the changed position, is displaced in the first direction (29) towards the sonotrode (3).

10. Method according to claim 8,
wherein a matrix element (39) is introduced into the receiving space (11) before carrying out method step (a) and/or method step (c),
wherein in method step (a) the side slider (9), starting from the initial position, is displaced in the second direction (31) towards the touching element (7),
wherein in method step (b) the touching element (7) is displaced in the first direction (29) into the changed position, and
wherein in method step (c) the lateral slider (9) is displaced in the second direction (31) towards the touching element (7) in the changed position.

11. Method according to one of the preceding claims,
wherein the determined status information is examined for typical characteristics which indicate a previously known status of at least one of the components (2), and
wherein a process is initiated when a typical characteristic is recognised, selected from the group comprising:
- initiating maintenance of the ultrasonic welding device (1);
- initiating replacement of at least one of the components (2) of the ultrasonic welding device (1);
- calculating a remaining service life of at least one component (2) of the ultrasonic welding device (1), optionally taking into account the recognised typical characteristic;
- outputting a signal indicating the presence of the previously known status;
- checking the plausibility of correct use of the components (2) used in the ultrasonic welding device (1);
- recording a camera image of at least one component (2) of the ultrasonic welding device (1).

12. Method according to one of the preceding claims,
wherein the status information is determined several times at successive points in time during operation of the ultrasonic welding device (1) and wherein the determined status information is compared for typical changes which indicate a previously known status of at least one of the components (2), and
wherein, when a typical change is recognised, a process is initiated, selected from the group comprising:
- initiating maintenance of the ultrasonic welding device (1);
- initiating replacement of at least one of the components (2) of the ultrasonic welding device (1);
- calculating a remaining service life of at least one component (2) of the ultrasonic welding device (1), optionally taking into account the recognised typical characteristic;
- outputting a signal indicating the presence of the previously known status;
- checking the plausibility of correct use of the components (2) used in the ultrasonic welding device (1);
- recording a camera image of at least one component (2) of the ultrasonic welding device (1).

13. Ultrasonic welding device (1), comprising:
- a plurality of components (2) comprising:
a sonotrode (3); and/or
an anvil (5) and/or;
a touching element (7); and/or
a lateral slider (9); and
- a receiving space (11) in which joining partners are to be received;
wherein the receiving space (11) is bounded on a first side by a surface (13) of a first (33) of the components (2), in particular the sonotrode (3), and on a second side opposite the first side by a surface (15) of a second (35) of the components (2), in particular the anvil (5);
wherein the receiving space (11) is further optionally bounded on a third side by a surface (17) of a third of the components (2), in particular the touching element (7), and on a fourth side opposite the third side by a surface (19) of a fourth of the components (2), in particular the lateral slider (9);
wherein at least a first (33) of the components (2) and a second (35) of the components (2) opposite the first component (33) are displaceable relative to one another in a first displacement direction (21) towards one another and are displaceable relative to one another in a second displacement direction (23) directed transversely to the first displacement direction (21);
wherein the first component (33) and the second component (35) are displaceable relative to each other in the first displacement direction (21) in such a way that a counterforce acting on the first component (33) against the first displacement direction (21) does not exceed a predetermined maximum force;
wherein the ultrasonic welding device (1) is configured to perform or control the method according to any one of claims 1 to 12.

14. Computer program product comprising instructions which, when executed on a processor, cause the processor to execute or control, in an ultrasonic welding device (1) according to claim 13, the method according to any one of claims 1 to 12.

15. Computer readable medium having a computer program product stored thereon according to claim 14.

## Revendications

1. Procédé de détermination d'une information d'état pour un dispositif de soudage par ultrasons (1), dans lequel l'information d'état indique une information sur un état actuel d'au moins un composant (2) du dispositif de soudage par ultrasons (1),
dans lequel le dispositif de soudage par ultrasons (1) présente :
- plusieurs composants (2) comprenant :
une sonotrode (3) ; et/ou
une enclume (5) ; et/ou
un élément de contact (7) ; et/ou
un curseur latéral (9) ; et
- un espace de réception (11), dans lequel des partenaires d'assemblage doivent être reçus ;
dans lequel l'espace de réception (11) est délimité sur un premier côté par une surface (13) d'un premier (33) des composants (2), en particulier de la sonotrode (3), et sur un deuxième côté opposé au premier côté par une surface (15) d'un deuxième (35) des composants (2), en particulier de l'enclume (5) ;
dans lequel l'espace de réception (11) est en outre éventuellement délimité sur un troisième côté par une surface (17) d'un troisième des composants (2), en particulier de l'élément de contact (7), et sur un quatrième côté opposé au troisième côté par une surface (19) d'un quatrième des composants (2), en particulier du curseur latéral (9) ;
dans lequel au moins le premier (33) des composants (2) et
le deuxième (35) des composants (2) opposé au premier composant (2) peuvent être déplacés l'un par rapport à l'autre dans une première direction de déplacement (21) l'un vers l'autre et peuvent être déplacés l'un par rapport à l'autre dans une deuxième direction de déplacement (23) orientée transversalement à la première direction de déplacement (21) ;
dans lequel le premier composant (33) et le deuxième composant (35) peuvent être déplacés l'un par rapport à l'autre dans la première direction de déplacement (21) de telle sorte qu'une force antagoniste, qui agit sur le premier composant (33) à l'encontre de la première direction de déplacement (21), atteint une force maximale prédéterminée ;
dans lequel le procédé présente les étapes de procédé suivantes :
(a) déplacement du premier composant (33) et du deuxième composant (35) l'un par rapport à l'autre, à partir d'une position initiale, dans la première direction de déplacement (21) et détection d'une première position de butée à laquelle la force antagoniste agissant sur le premier composant (33) lors du déplacement atteint la force maximale prédéterminée ;
(b) déplacement du premier composant (33) et du deuxième composant (35) l'un par rapport à l'autre dans la deuxième direction de déplacement (23) dans une position modifiée ; et
(c) nouveau déplacement du premier composant (33) et du deuxième composant (35) l'un par rapport à l'autre, à partir de la position modifiée, dans la première direction de déplacement (21) et détection d'une deuxième position de butée à laquelle la force antagoniste agissant sur le premier composant (33) lors du déplacement atteint la force maximale prédéterminée ;
(d) détermination de l'information d'état sur la base de la première et de la deuxième position de butée détectée.

2. Procédé selon la revendication 1,
dans lequel les étapes de procédé (b) et (c) sont répétées plusieurs fois afin de détecter une pluralité de deuxièmes positions de butée pour différentes positions du premier composant (33) par rapport au deuxième composant (35), et dans lequel, à l'étape de procédé (d), l'information d'état est déterminée sur la base de la première position de butée détectée et de la pluralité de deuxièmes positions de butée.

3. Procédé selon l'une des revendications 1 et 2,
dans lequel, aux étapes de procédé (a) et (c), le premier composant (33) et le deuxième composant (35) sont déplacés l'un par rapport à l'autre jusqu'à ce qu'une surface du premier composant (33) opposée au deuxième composant (35) entre en contact avec le deuxième composant (35).

4. Procédé selon l'une des revendications 1 et 2,
dans lequel, avant l'exécution de l'étape de procédé (a) et/ou de l'étape de procédé (c), un élément de matrice (39) est introduit dans l'espace de réception (11), et
dans lequel, aux étapes de procédé (a) et (c), le premier composant (33) et le deuxième composant (35) sont déplacés l'un par rapport à l'autre jusqu'à ce que l'élément de matrice (39) entre en contact avec le premier composant (33) par une surface orientée vers le premier composant (33) et entre en contact avec le deuxième composant (35) par une surface orientée vers le deuxième composant (35).

5. Procédé selon la revendication 4,
dans lequel l'élément de matrice (39) est fixé soit au premier composant (33), soit au deuxième composant (35).

6. Procédé selon l'une des revendications 4 et 5,
dans lequel l'élément de matrice (39) présente, sur un côté orienté vers le premier composant (33) ou le deuxième composant (35), une largeur inférieure à la surface du premier ou du deuxième composant (33, 35), respectivement, en contact avec l'élément de matrice (39).

7. Procédé selon l'une des revendications 4 à 6,
dans lequel l'élément de matrice (39) présente, sur un côté orienté vers le premier composant (33) ou sur un côté orienté vers le deuxième composant (35), une largeur plus grande que sur un côté opposé à celui-ci.

8. Procédé selon l'une des revendications précédentes,
dans lequel l'enclume (5) peut être déplacée par rapport à la sonotrode (3) dans une première direction (29) et dans une deuxième direction (31) transversalement à celle-ci,
dans lequel l'élément de contact (7) est fixé à l'enclume (5) dans la première direction (29) et peut être déplacé par rapport à l'enclume (5) dans la deuxième direction (31), et
dans lequel le curseur latéral (9) est maintenu stationnaire par rapport à la sonotrode (3) dans la première direction (29) et peut être déplacé par rapport à la sonotrode (3) dans la deuxième direction (31).

9. Procédé selon la revendication 8,
dans lequel, à l'étape de procédé (a), l'enclume (5) est déplacée dans la première direction (29) vers la sonotrode (3) à partir de la position initiale,
dans lequel, à l'étape de procédé (b), l'enclume (5) est déplacée dans la deuxième direction (31) dans la position modifiée, et
dans lequel, à l'étape de procédé (c), l'enclume (5) est déplacée dans la première direction (29) vers la sonotrode (3) à partir de la position modifiée.

10. Procédé selon la revendication 8,
dans lequel, avant l'exécution de l'étape de procédé (a) et/ou de l'étape de procédé (c), un élément de matrice (39) est introduit dans l'espace de réception (11),
dans lequel, à l'étape de procédé (a), le curseur latéral (9) est déplacé, à partir de la position initiale, dans la deuxième direction (31) vers l'élément de contact (7),
dans lequel, à l'étape de procédé (b), l'élément de contact (7) est déplacé dans la première direction (29) dans la position modifiée, et
dans lequel, à l'étape de procédé (c), le curseur latéral (9) est déplacé dans la deuxième direction (31) vers l'élément de contact (7) dans la position modifiée.

11. Procédé selon l'une des revendications précédentes,
dans lequel l'information d'état déterminée est analysée pour déterminer des caractéristiques typiques qui indiquent un état déjà connu d'au moins un des composants (2), et
dans lequel, en cas de détection d'une caractéristique typique, une opération est initiée, choisie dans le groupe comprenant :
- provocation d'une maintenance du dispositif de soudage par ultrasons (1) ;
- provocation d'un remplacement d'au moins un des composants (2) du dispositif de soudage par ultrasons (1) ;
- calcul d'une durée de vie restante d'au moins un composant (2) du dispositif de soudage par ultrasons (1), éventuellement en tenant compte de la caractéristique typique détectée ;
- émission d'un signal indiquant la présence de l'état déjà connu ;
- vérification de la plausibilité d'une utilisation correcte des composants (2) utilisés dans le dispositif de soudage par ultrasons (1) ;
- prise d'une image de caméra d'au moins un composant (2) du dispositif de soudage par ultrasons (1).

12. Procédé selon l'une des revendications précédentes,
dans lequel l'information d'état est déterminée plusieurs fois à des instants successifs pendant le fonctionnement du dispositif de soudage par ultrasons (1) et dans lequel les informations d'état déterminées sont comparées à des modifications typiques qui indiquent un état déjà connu d'au moins un des composants (2), et
dans lequel, en cas de détection d'une modification typique, une opération est initiée, choisie dans le groupe comprenant :
- provocation d'une maintenance du dispositif de soudage par ultrasons (1) ;
- provocation d'un remplacement d'au moins un des composants (2) du dispositif de soudage par ultrasons (1) ;
- calcul d'une durée de vie restante d'au moins un composant (2) du dispositif de soudage par ultrasons (1), éventuellement en tenant compte de la caractéristique typique détectée ;
- émission d'un signal indiquant la présence de l'état déjà connu ;
- vérification de la plausibilité d'une utilisation correcte des composants (2) utilisés dans le dispositif de soudage par ultrasons (1) ;
- prise d'une image de caméra d'au moins un composant (2) du dispositif de soudage par ultrasons (1).

13. Dispositif de soudage par ultrasons (1), présentant :
- plusieurs composants (2) comprenant :
une sonotrode (3) ; et/ou
une enclume (5) ; et/ou
un élément de contact (7) ; et/ou un curseur latéral (9) ; et
- un espace de réception (11), dans lequel des partenaires d'assemblage doivent être reçus ;
dans lequel l'espace de réception (11) est délimité sur un premier côté par une surface (13) d'un premier (33) des composants (2), en particulier de la sonotrode (3), et sur un deuxième côté opposé au premier côté par une surface (15) d'un deuxième (35) des composants (2), en particulier de l'enclume (5) ;
dans lequel l'espace de réception (11) est en outre éventuellement délimité sur un troisième côté par une surface (17) d'un troisième des composants (2), en particulier de l'élément de contact (7), et sur un quatrième côté opposé au troisième côté par une surface (19) d'un quatrième des composants (2), en particulier du curseur latéral (9) ;
dans lequel au moins un premier (33) des composants (2) et un deuxième (35) des composants (2) opposé au premier composant (33) peuvent être déplacés l'un par rapport à l'autre dans une première direction de déplacement (21) l'un vers l'autre et peuvent être déplacés l'un par rapport à l'autre dans une deuxième direction de déplacement (23) orientée transversalement à la première direction de déplacement (21) ;
dans lequel le premier composant (33) et le deuxième composant (35) peuvent être déplacés l'un par rapport à l'autre dans la première direction de déplacement (21) de telle sorte qu'une force antagoniste, qui agit sur le premier composant (33) à l'encontre de la première direction de déplacement (21), ne dépasse pas une force maximale prédéterminée ;
dans lequel le dispositif de soudage par ultrasons (1) est configuré pour mettre en oeuvre ou contrôler le procédé selon l'une des revendications 1 à 12.

14. Produit programme d'ordinateur comprenant des instructions qui, lorsqu'elles sont exécutées sur un processeur, amènent ce dernier à mettre en oeuvre ou à contrôler, dans un dispositif de soudage par ultrasons (1) selon la revendication 13, le procédé selon l'une des revendications 1 à 12.

15. Support lisible par ordinateur sur lequel est stocké un produit programme d'ordinateur selon la revendication 14.
